# FASCICULE DE BREVET EUROPEEN

(11) **EP 1 257 030 B1**
(45) Date de publication et mention de la délivrance du brevet: **10.03.2004**
(21) Numéro de dépôt: 02370019.8
(22) Date de dépôt: 10.05.2002
(51) Int. Cl.: H02G 3/04, H02G 3/06

(54) **Chemin de câbles**
Kabelkanal
Cable duct

(30) Priorité: 11.05.2001 FR 0106262
(43) Date de publication de la demande: 13.11.2002
(73) Titulaire: Tolmega S.A., 51100 Reims (FR)
(72) Inventeur: Colmart, André, 62290 Noeux Les Mines (FR); Loyer, Thierry, 62260 Cauchy La Tour (FR); Tama, Richard, 62151 Burbure (FR)
(74) Mandataire: Hennion, Jean-Claude

(56) Documents cités:
- EP-A- 0 191 667
- FR-A- 2 715 987
- GB-A- 293 952
- NL-A- 273 895
- US-A- 3 792 189
- US-A- 5 332 866

## Description

L'invention se rapporte au domaine technique des chemins de câbles.

Les chemins de câbles sont des structures en forme de gouttière permettant de supporter, de guider et de protéger des câbles tels que notamment des câbles électriques, des câbles téléphoniques, des câbles de fibres optiques, des câbles de réseau informatique, des canalisations.

Les chemins de câbles peuvent être à fil ou en feuille perforée ou non, les expressions « chemin de câbles », « chemin de câbles à fil », « chemin de câbles perforés », « chemin de câbles à base pleine » étant employées ici en référence notamment à la norme internationale publiée en septembre 2001 sous le numéro CEI 61537.

Par « chemins de câbles à fil » on désigne ici des chemins de câbles réalisés par assemblage de deux séries de fils, à savoir, une première série de fils, communément appelés fils de chaîne, courant longitudinalement, de manière typiquement rectiligne ou quasi rectiligne sur toute leur longueur ; et une deuxième série de fils, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage. Les fils de trame sont typiquement en U, de sorte que le chemin à câbles en treillis comprend un panneau de fond et deux panneaux latéraux, communément appelés ailes. Par « fils » on désigne ici aussi bien des profilés pleins de section transversale sensiblement ovale ou circulaire, que des profilés de section transversale carrée ou rectangulaire. Les fils de trame peuvent notamment se présenter sous forme de bandes étroites, de section transversale rectangulaire.

Les fils sont de sections identiques ou non, les fils longitudinaux du panneau de fond autres que ceux plus proches des ailes latérales étant par exemple de section plus faible.

Afin de résister à la corrosion, les treillis de fils peuvent être revêtus ou bien encore zingués ou galvanisés à chaud. La soudure des fils est conventionnellement réalisée à plat, le treillis étant déformé par pliage ou cambrage, après soudure, de façon à prendre la forme d'une gouttière.

Des exemples de chemins de câbles à fil du type présenté ci-dessus peuvent être trouvés dans les documents suivants : demandes de brevet français publiées sous les numéros 2017070, 2376539, 2576158, 2599906, 2613146, 2617341, 2628904, 2634600, 2645359, 2652206, 2652142, 2669708, 2686393, 2687207, 2691590, 2697313, 2697690, 2698416, 2706973, 2716242, 2716768, 2723270, 2725772, 2725846, 2727186, 2728649, 2734503, 2737355, 2750754, 2766897; demandes de brevet européen publiées sous les numéros 0191667, 0229544, 0275185, 0352191, 0355081, 0390668, 0418167, 0553039, 0556137, 0718944, 0818862, 0905843 ; demandes internationales de brevet publiées sous les numéros 96/08063, 99/06746 ; demandes de brevet allemands publiées sous les numéros 2036325, 4037412, 4336168.

Par « chemins de câbles en feuille » on désigne ici des chemins à câbles formés par l'assemblage de profils, le plus souvent métalliques, comprenant au moins une paroi formant fond et deux ailes, ces profils présentant notamment des sections transversales en U ou en C. Les parois des chemins de câbles en feuille peuvent être pleines ou perforées, et sont parfois configurées sur leur bord libre pour recevoir un couvercle, par exemple par encliquetage.

Afin de résister à la corrosion, les tôles subissent conventionnellement un traitement de surface tel que peinture, zingage ou galvanisation à chaud.

Le cas échéant, en cas d'atmosphère très agressive, un acier inoxydable est employé pour les tôles. Ces chemins de câbles peuvent également être en matériau composite, tel que par exemple polyester armé, notamment obtenu par pultrusion.

Des exemples de chemins de câbles en feuille du type présenté ci-dessus peuvent être trouvés dans les documents suivants : demandes de brevet en France publiées sous les numéros 1471497, 2290063, 2306552, 2313786, 2365902, 2383539, 2395449, 2406327, 2435844, 2478389, 2481015, 2536219, 2610145, 2610769, 2615587, 2683403, 2686142, 2689605, 2691227, 2691228, 2712831, 2734956, 2749912, 2749913, 2749914, 2769761, 2481015 ; demandes de brevet européen publiées sous les numéros 054456, 113981, 208924, 278923, 292389, 315531, 348285, 403440, 518404, 570272, 657672, 695009, 813012 ; demande internationale de brevet publiée sous le numéro 93/23694.

Depuis de nombreuses années, et sans qu'il existe des règles internationales ou européennes en la matière, la dimension longitudinale des tronçons de chemins de câbles à fil ou en feuille est de trois mètres, en général, ainsi qu'il est rappelé page 2 lignes 12 et 13 du document FR-A-2 737 355.

A partir de ces tronçons, on constitue les réseaux de chemins de câbles que l'on souhaite.

A cet effet, on positionne bout à bout les tronçons de chemins de câbles et on immobilise ces tronçons à l'aide d'éclisses ou plaquettes plates, éventuellement articulées, ou par des cornières.

Les tronçons sont également fixés, de place en place, sur des consoles ou des pendards, ou bien encore suspendus, la distance entre les supports étant typiquement de l'ordre de un mètre cinquante.

Les fabricants de chemins de câbles ont développé, depuis de nombreuses années, de très nombreuses solutions techniques visant à faciliter l'éclissage des tronçons de chemins de câbles, tant pour ce qui est du nombre d'outils et de pièces que du temps de montage des éclisses sur les tronçons.

La diversité des solutions techniques illustre bien l'importance accordée par les fabricants à ces éclisses ; pour lesquelles on distingue quatre grands types de mise en place :
- le boulonnage, ainsi que présenté dans les documents EP-A-0298825, EP-A-0399790, EP-A-0617493 ;
- le soudage, ainsi que présenté dans le document EP-A-0571307 ;
- le rabattement de pattes préalablement introduites dans des perforations des chemins de câbles en feuille, ainsi que présenté dans les documents FR-A-1584328, EP-A-0461974 ;
- le montage à force ou l'encliquetage, ainsi que présenté dans les documents DE-U-8901613, FR-A-2686141, FR-A-2606843, FR-A-2303843, FR-A-2208219, US-A-5384937, EP-A-0083809, EP-A-0933850, US-B-6193434.

On connaît également des éclisses d'assemblage montées coulissantes : documents GB-A-2237454, FR-A-2588426, EP-A-822364, EP-A-1193821.

Le transport et le stockage des chemins de câbles entraînent des coûts importants.

La demanderesse a constaté que la longueur de trois mètres des chemins de câbles, à laquelle les poseurs sont très habitués, entraîne un coût élevé et/ou un délai important au transport, du fait des gabarits des véhicules de transport.

La demanderesse a cherché s'il existait un moyen permettant de réduire ces coûts de transport.

Le document EP-A-074698 propose d'empiler des échelles à câbles. Les échelles à câbles comprennent classiquement deux longerons sensiblement parallèles, entre lesquels s'étendent des échelons, parfois dénommés traverses ou barreaux transversaux, sur lesquels reposent les câbles, directement ou par le biais de supports intermédiaires.

L'empilement d'échelles à câbles est également proposé dans le document GB-A-2105920.

La demanderesse a constaté que l'empilement des tronçons de chemins de câbles poserait de nombreux problèmes pratiques :
- nécessité de modifier la forme conventionnelle des tronçons en U, de sorte à permettre l'empilement;
- difficulté à désempiler les tronçons, par suite des frottements ou du coincement des tronçons les uns dans les autres, après stockage prolongé et fluage sous charge.

Les documents EP-A-818862 et US-A-5927658 présentent des tronçons de chemins de câbles à fil empilables, la section transversale des tronçons possédant un élargissement étagé, les fils transversaux étant doublement pliés sur les ailes des tronçons de sorte à permettre l'empilement.

La forme spécifique des tronçons de chemins de câbles empilables, tels que décrits dans les documents EP-A-818862 et US-A-5927658, ne permet pas leur assemblage facile sur des tronçons conventionnels.

Les difficultés pratiques liées à l'empilement et au désempilement des tronçons font que cette solution technique, bien que proposée de manière récurrente (cf. documents CH-A-634178 de 1978, EP-A-298825 de 1988 et EP-A-818862 de 1997) ne parvient pas à répondre au problème posé par l'encombrement des tronçons, tant lors du transport que du stockage.

Une autre solution proposée dans l'art antérieur pour réduire les volumes morts lors du stockage et du transport, a consisté à articuler une aile de chemins de câbles à fil, pour la laisser en position rabattue d'attente lors du stockage ou du transport (cf. document EP-A-191667).

Il a été également proposé des chemins de câbles à fil formés d'éléments longitudinaux démontables et pouvant être réunis entre eux au moyen de dispositifs d'engagement (cf. documents FR-A-2599906 et FR-A-2613146).

De telles conceptions présentent de nombreux inconvénients. En particulier, les tronçons de chemins de câbles pourvus de moyens d'assemblage de sous tronçons longitudinaux s'avèrent de résistance mécanique médiocre, sauf à compliquer encore les moyens d'assemblage.

Le document FR-2715987 décrit un dispositif pour l'acheminement de réseaux comprenant des tubes horizontaux télescopiques fermés, de section triangulaire, autoportants.

L'invention vise à fournir des moyens de réduction des volumes morts et/ou des longueurs lors du stockage ou du transport de tronçons de chemins de câbles, ces moyens ne présentant pas les inconvénients de ceux connus antérieurement et permettant notamment de maintenir pour le tronçon un profil transversal compatible avec ceux des chemins de câbles conventionnels, notamment vis à vis de l'éclissage.

L'invention vise par ailleurs à fournir des tronçons de chemins de câbles d'une longueur utile correspondant aux habitudes du poseur et/ou lui permettant d'améliorer sa productivité.

L'invention vise notamment à fournir aux poseurs des tronçons de chemins de câbles de longueur supérieure à celles conventionnelles, réduisant ainsi le nombre d'opérations d'éclissage.

L'invention vise également à fournir des tronçons de chemins de câbles à fil ou en feuille, ces tronçons ayant des dimensions optimisées par rapport au moyen de transport choisi.

A ces fins, l'invention se rapporte, selon un premier aspect, à un chemin de câbles en forme de gouttière comprenant au moins deux tronçons pourvus de moyens aptes et conçus pour assurer le mouvement relatif des deux tronçons depuis une première position compacte, de transport ou stockage, jusqu'à une deuxième position déployée d'utilisation dans laquelle les parties extrêmes des tronçons sont sensiblement en alignement longitudinal, des moyens assurant un verrouillage des tronçons dans cette deuxième position.

Les moyens aptes et conçus pour assurer le mouvement relatif des deux tronçons depuis leur première jusqu'à leur deuxième position relatives sont en particulier des moyens d'articulation ou des moyens de coulissement, l'articulation des tronçons pouvant être effectuée sur sensiblement 180 degrés, le coulissement pouvant être avantageusement combiné à l'articulation.

Selon un premier type général de réalisations, les moyens d'articulation définissent un axe d'articulation sensiblement parallèle à une direction transversale à la paroi de fond des tronçons.

Selon un deuxième type général de réalisations, les moyens d'articulation définissent un axe d'articulation sensiblement parallèle à une direction transversale à une aile des tronçons. Il est entendu que le premier et le deuxième type de réalisations peuvent être employés tous deux pour la constitution d'un réseau de chemin de câbles donné.

Dans une première série de réalisations, l'articulation des deux tronçons est assurée par des moyens d'articulation comprenant une charnière.

Selon diverses réalisations particulières, cette charnière présente les caractères suivants, éventuellement combinés :
- elle comprend une platine rapportée ou intégrée sur l'un des deux tronçons, cette platine rapportée portant des charnons complémentaires de ceux portés par l'autre tronçon ;
- elle comprend deux platines rapportées ou intégrées, chaque tronçon supportant une platine, une fiche traversant les charnons des platines, la fiche étant avantageusement amovible, notamment lorsque les tronçons sont empilables, après enlèvement de la fiche ;
- elle est de type compris parmi le groupe constitué des charnières américaines, des charnières à double feuille, des charnières à noeud renvoyé, des charnières à congés, des charnières à briquet, des charnières à ressort, des charnières à piano.

Dans d'autres réalisations particulières, chacun des deux tronçons porte, sur au moins un de ses bords, des saillies formant charnons d'articulation, venues de matière ou rapportée. Par exemple, un premier tronçon porte, sur un de ses bords libres transversaux, au moins deux saillies formant charrions d'articulation, un deuxième tronçon destiné à être articulé au premier tronçon portant sur un de ses bords libres transversaux au moins deux trous traversant de passage de ces charnons. Les trous traversant disposés sur la paroi de fond du deuxième tronçon sont, dans une mise en oeuvre, disposés en retrait longitudinal par rapport au plan transversal tangent au bord extrême libre des ailes de ce deuxième tronçon, les saillies formant charnons disposées sur la paroi de fond du premier tronçon saillant au delà du plan transversal tangent au bord extrême libre des ailes de ce premier tronçon.

Dans une deuxième série de réalisations, les deux tronçons comprennent deux ailes saillant sur les bords latéraux d'une paroi de fond, l'articulation de ces deux tronçons entre leur première et deuxième position relative étant assurée par des moyens d'articulation disposés sur chacune des ailes de ces tronçons.

Dans une première série de variantes, les moyens d'articulation comprennent deux pièces de liaison montées ou façonnés sur les faces internes et en regard des ailes des tronçons.

Selon diverses réalisations particulières, ces pièces de liaison internes présentent les caractères suivants, éventuellement combinés :
- elles comportent au moins une lumière au travers de laquelle passe un axe porté par une aile d'un premier tronçon, les pièces de liaison comprenant en outre au moins un téton venant s'engager dans une empreinte portée par une aile du deuxième tronçon, l'engagement de ce téton dans cette empreinte lors du pivotement relatif d'un tronçon par rapport à l'autre, assurant un verrouillage en alignement longitudinal de la partie extrême des deux tronçons ;
- elles sont sensiblement planes et en forme de demi-disque ou demi-anneau, les parties extrêmes des tronçons venant en regard l'une de l'autre étant pourvues de gorges longitudinales de passage des pièces de liaison ;
- les tétons des pièces de liaison sont issus d'emboutissage, les empreintes dans lesquelles viennent se loger ces tétons étant des trous traversant ou non.

Dans une deuxième série de variantes, les moyens d'articulation comprennent deux pièces de liaison montées sur les faces externes des ailes des tronçons.

Selon diverses réalisations particulières, ces pièces de liaison externes comprennent une lumière allongée dans laquelle viennent coulisser deux axes saillant vers l'extérieur des ailes de tronçon, cette lumière étant pourvue d'encoches sensiblement distantes de l'écartement des axes, mesuré en position d'alignement longitudinal des deux tronçons.

Selon une troisième série de réalisations, l'articulation des deux tronçons est assurée par une ligne d'affaiblissement transversale, comprenant des perforations dans la paroi de fond ou une aile des tronçons et/ou un amincissement de cette paroi de fond ou de cette aile.

Selon une quatrième série de réalisations, les ailes d'un premier tronçon sont pourvues de saillies longitudinales supportant un axe transversal commun aux ailes du deuxième tronçon. Au moins une saillie longitudinale est pourvue de reliefs tels qu'emboutis venant se loger dans des réservations de verrouillage, disposées dans le deuxième tronçon, lorsque les deux tronçons sont en alignement longitudinal.

Selon une cinquième série de réalisations, l'articulation des deux tronçons est assurée par des moyens d'articulation comprenant une lame élastique, fixée par collage, soudage ou encliquetage sur la paroi de fond ou une aile des deux tronçons articulés, l'élasticité de cette lame autorisant la rotation de 180 degrés d'un tronçon par rapport à l'autre.

Selon une sixième série de réalisations, le chemin de câbles comprend au moins un premier tronçon interne, monté coulissant par rapport à un deuxième tronçon externe, le tronçon interne et le tronçon externe étant sensiblement homothétiques, sur la majeure partie de leurs profils, des moyens de verrouillage assurant le blocage d'u tronçon par rapport à l'autre, en fin de course. Par « fin de course », on désigne ici le télescopage des tronçons jusqu'à la longueur désirée par le poseur.

Dans un mode particulier de mise en oeuvre, les ailes des tronçons interne et externe sont pourvues d'un ressaut inhibant le mouvement vertical du tronçon interne par rapport au tronçon externe.

Pour chacune de réalisations qui viennent d'être présentées, au moins un des deux tronçons peut être à base de treillis de fil nu ou habillé, ou en feuille perforée ou non.

Dans d'autres réalisations, les parties extrêmes des deux tronçons sont en treillis de fil, et les moyens d'articulation comprennent les éléments suivants, seuls ou en combinaison :
- une boucle d'articulation ou une bande reliant les fils de trame extrêmes des tronçons sur leur segment de base de paroi de fond de ces tronçons ;
- au moins deux parties extrêmes saillantes courbées en S des fils de chaîne d'au moins un des tronçons ;
- un amincissement des fils de chaîne en au moins une zone de la paroi de fond ou d'une aile de ces tronçons.

Les moyens de verrouillage en position d'alignement longitudinal des parties extrêmes des tronçons comprenant par exemple un barreau maintenu plaqué entre les fils de chaînes des ailes contiguës des deux tronçons, ce barreau étant monté articulé sur les deux tronçons.

Le cas échéant, sur au moins une aile des tronçons, une bande élastique vient enserrer les fils de trame extrêmes des tronçons placés en vis à vis, lorsque les parties extrêmes des tronçons sont dans leur position d'alignement longitudinal.

Pour chacune des réalisations précédentes, au moins un des tronçons est avantageusement pourvu de saillies, sur la face inférieure de sa paroi de fond, ces saillies formant butée d'appui, lorsque les tronçons sont empilés, contre la face interne du tronçon placé au dessous, dans l'empilement.

D'autres objets et avantages de l'invention apparaîtront au cours de la description suivante de modes de réalisation, description qui va être effectuée en se référant aux dessins annexés, dans lesquels :
- la figure 1 est une vue en perspective de la partie extrême d'articulation de deux tronçons de chemin de câbles, selon un premier mode de réalisation ;
- la figure 2 est une vue latérale de la partie extrême d'articulation de deux tronçons de chemins de câbles, selon un deuxième mode de réalisation, ces parties extrêmes étant représentées dans une position intermédiaire entre celle de transport et celle d'alignement longitudinal et verrouillage ;
- la figure 3 est une vue latérale analogue à celle de la figure 2, les parties extrêmes articulées des deux tronçons de chemin de câbles étant représentées en alignement longitudinal et verrouillage ;
- la figure 4 est une vue latérale d'une pièce d'articulation du type utilisé dans le mode de réalisation des figures 2 et 3, cette pièce d'articulation étant vue seule, dissociée des tronçons de chemin de câbles ;
- la figure 5 est une vue de dessous de la pièce représentée en figure 4 ;
- la figure 6 est une vue en coupe transversale selon le plan VI-VI de la figure 5 ;
- les figures 7, 8 et 9 sont des vues latérales analogues à celle de la figure 4, de pièces d'articulation de chemin de câbles, selon trois variantes de réalisation ;
- la figure 10 est une vue en perspective d'une partie extrême d'un tronçon de chemin de câbles apte et conçu pour recevoir en face interne d'au moins une de ses ailes, une pièce d'articulation telle que représentée en figures 4 à 9 ;
- la figure 11 est une vue latérale de la partie extrême de deux tronçons de chemin de câbles articulés, selon un troisième mode de réalisation, ces parties extrêmes étant représentées dans une position intermédiaire entre celle de transport et celle de montage des chemins de câbles ;
- la figure 12 est une vue latérale analogue à celle de la figure 11, les parties extrêmes articulées des deux tronçons de chemins de câbles étant représentées en alignement longitudinal, dans la position verrouillée de montage des deux tronçons ;
- la figure 13 est une vue en coupe transversale selon le plan XIII-XIII de la figure 12 ;
- la figure 14 est une vue en coupe longitudinale de la partie extrême d'articulation de deux tronçons de chemins de câbles, selon un quatrième mode de réalisation, les parties extrêmes articulées des deux tronçons étant représentées dans leur position relative de transport ou stockage ;
- la figure 15 est une vue latérale des parties extrêmes articulées des deux tronçons de chemin de câbles de la figure 14, ces parties extrêmes étant représentées en position verrouillée d'alignement longitudinal ;
- la figure 16 est une vue latérale des parties extrêmes articulées des deux tronçons de chemin de câbles des figures 14 et 15, ces parties extrêmes étant représentées en une position intermédiaire de pivotement ;
- la figure 17 est une vue en coupe transversale de deux tronçons articulés par des moyens tels que vus en figure 14 à 16, les deux tronçons étant représentés dans leur position relative repliée de transport ou stockage, avec imbrication élastique des ailes des tronçons ;
- la figure 18 est une vue latérale de moyens d'articulation de deux tronçons de chemins de câbles, selon une variante de réalisation, les parties extrêmes articulées des deux tronçons étant vues dans leur position verrouillée d'alignement longitudinal, avec un axe élastique rapporté ;
- la figure 19 est une vue analogue à celle de la figure 18, avec une pièce de liaison plus courte, intégrée à l'un des deux tronçons;
- la figure 20 est une vue de détail de la pièce d'articulation rapportée représentée en figure 18 ;
- la figure 21 est une vue de dessus de parties extrêmes de deux tronçons de chemins de câbles pourvus de moyens d'articulation et verrouillage rapportés, selon un sixième mode de réalisation ;
- la figure 22 est une vue latérale et en coupe transversale des deux parties extrêmes des tronçons représentés en figure 21 ;
- les figures 23, 24 et 25 sont des vues latérales analogues à celle de la figure 22, les parties extrêmes des tronçons étant représentées respectivement en position repliée de stockage et transport (figure 23), en position déployée et verrouillée d'alignement longitudinal (figure 24) et en une position intermédiaire de pivotement (figure 25) ;
- la figure 26 est une vue de dessus de deux tronçons de chemins de câbles articulés à un tronçon intermédiaire, l'ensemble étant représenté en une position intermédiaire de pivotement, selon un septième mode de réalisation ;
- la figure 27 est une vue analogue à la figure 26, les tronçons étant représentés en position repliée de stockage ou transport ;
- la figure 28 est une vue analogue à celles des figures 26 et 27, les tronçons étant représentés dans leur position déployée d'utilisation et verrouillée d'alignement longitudinal ;
- la figure 29 est une vue de détail de moyens de verrouillage tels que mis en oeuvre dans les réalisations des figures 26 à 28 ;
- la figure 30 est une vue de dessus d'un tronçon de chemins de câbles en feuille pourvu d'une ligne d'affaiblissement transversale d'articulation, selon un huitième mode de réalisation ;
- la figure 31 est une vue latérale de la partie extrême articulée de deux tronçons de chemins de câbles, selon un neuvième mode de réalisation, les deux parties extrêmes des tronçons étant représentées dans leur position de repli de stockage ou transport ;
- la figure 32 est une vue latérale des parties extrêmes articulées des deux tronçons de chemins de câbles représentés en figure 31, les deux parties extrêmes étant vues en position verrouillée d'alignement longitudinal ;
- la figure 33 est une vue latérale de la figure 31 ;
- la figure 34 est une vue partielle de dessus d'un tronçon de chemin de câbles pourvu de moyens facilitant l'empilement et le désempilement ;
- la figure 35 est une vue latérale du tronçon vu en figure 34 ;
- la figure 36 est une vue en coupe schématique de trois tronçons du type représenté en figures 34 et 35, ces trois tronçons étant empilés ;
- les figures 37, 38, 39 et 40 sont des vues en coupe transversale (figure 37) et en demi coupes transversales (figures 37,39 et 40) de tronçons de chemin de câbles selon un dixième mode de réalisation ;
- la figure 41 et 42 sont respectivement une vue schématique latérale et une vue en perspective représentant des moyens d'articulation de deux tronçons de chemin de câbles selon un onzième mode de réalisation ;
- la figure 43 est une vue latérale de la partie extrême articulée de deux tronçons de chemin de câbles représentés dans leur position de repli l'un sur l'autre ;
- la figure 44 est une vue de dessus de ta partie extrême articulée des deux tronçons de chemin de câbles de la figure 43, ces deux parties extrêmes étant représentées dans leur position alignée de montage ;
- la figure 45 est une vue latérale de détail de moyens d'articulation en position d'alignement longitudinal des parties extrêmes de tronçons représentées en figure 43 et vus en figure 44 ;
- la figure 46 est une vue en coupe longitudinale de deux parties extrêmes articulées de chemins de câbles, selon un douzième mode de réalisation, ces parties extrêmes articulées étant représentées en position déployée d'alignement longitudinal ;
- la figure 47 est une vue analogue à celle de la figure 46, les deux parties extrêmes étant représentées en position de repli de stockage ou transport ;
- la figure 48 est une vue en coupe selon le plan AA de la figure 46 ;
- la figure 49 est une vue en coupe longitudinale d'un tronçon de chemin de câbles pourvu de moyens d'articulation selon un treizième mode de réalisation ;
- les figures 50 et 51 sont des vues en coupe longitudinale de deux parties extrêmes articulées de chemins de câbles selon un quatorzième mode de réalisation, ces parties extrêmes articulées étant représentées en position déployée d'alignement longitudinal (figure 50) et en une position intermédiaire de pivotement relatif (figure 51) ;
- la figure 52 est une vue en perspective partielle de deux parties extrêmes articulées de tronçons de chemin de câbles, selon un quinzième mode de réalisation, ces parties extrêmes étant représentées dans leur position verrouillée d'alignement longitudinal ;
- la figure 53 est une vue en coupe transversale partielle selon le plan CIII-CIII de la figure 52 ;
- la figure 54 est une vue de détail des moyens d'articulation et verrouillage mis en oeuvre dans le mode de réalisation représenté en figures 52 et 53 ;
- la figure 55 est une vue en perspective partielle de deux parties extrêmes articulées de tronçons de chemins de câbles, représentées dans une position intermédiaire de pivotement relatif ;
- la figure 56 est une vue partielle selon la direction CVI de la figure 55 ;
- la figure 57 est une vue latérale de deux tronçons de chemins de câbles, ces deux tronçons étant vus séparément en coupe transversale dans leur position de montage en figures 58 et 59 ;
- la figure 60 est une vue latérale de deux tronçons de chemins de câbles représentés repliés l'un dans l'autre, selon un autre mode de réalisation ;
- les figures 61 et 62 sont des vues latérale (figure 62) et en coupe (figure 61) de parties extrêmes de chemins de câbles pourvues de moyens d'articulation, ces deux parties extrêmes étant vues en position déployée d'alignement longitudinal (figure 61) et en position non-accouplée (figure 62) ;
- la figure 63 illustre un mode de réalisation de moyens de verrouillage en alignement longitudinal de tronçons de chemins de câbles dont au moins une des ailes est pourvue de trous longitudinaux ;
- les figures 64 à 67 représentent en coupe transversale et en vue latérale partielle différents modes de réalisation de languettes, saillies ou reliefs de verrouillage en alignement longitudinal de tronçons de chemins de câbles articulés.

Les tronçons de chemins de câbles représentés sur les figures annexées comprennent une paroi de fond et deux ailes latérales.

Dans la suite de cette description, les termes <>, <>, seront employés en référence à une première direction D1 d'élancement des tronçons de chemins de câbles.

Les termes « largeur », « transversal », seront employés en référence à une deuxième direction D2 perpendiculaire à la première direction D1, les directions D1 et D2 définissant un plan sensiblement parallèle à la paroi de fond des tronçons de chemins de câbles en position montée.

Les termes « hauteur », « vertical », seront employés en référence à une troisième direction D3, les directions D1, D2 et D3 formant un trièdre direct.

L'emploi des termes « hauteur », « vertical » dans la description qui va suivre ne doit pas être vu comme imposant une position de montage particulière pour les chemins de câbles et il est entendu que les chemins de câbles représentés sur les figures annexées peuvent être placés avec leur paroi de fond horizontales, inclinées ou verticales.

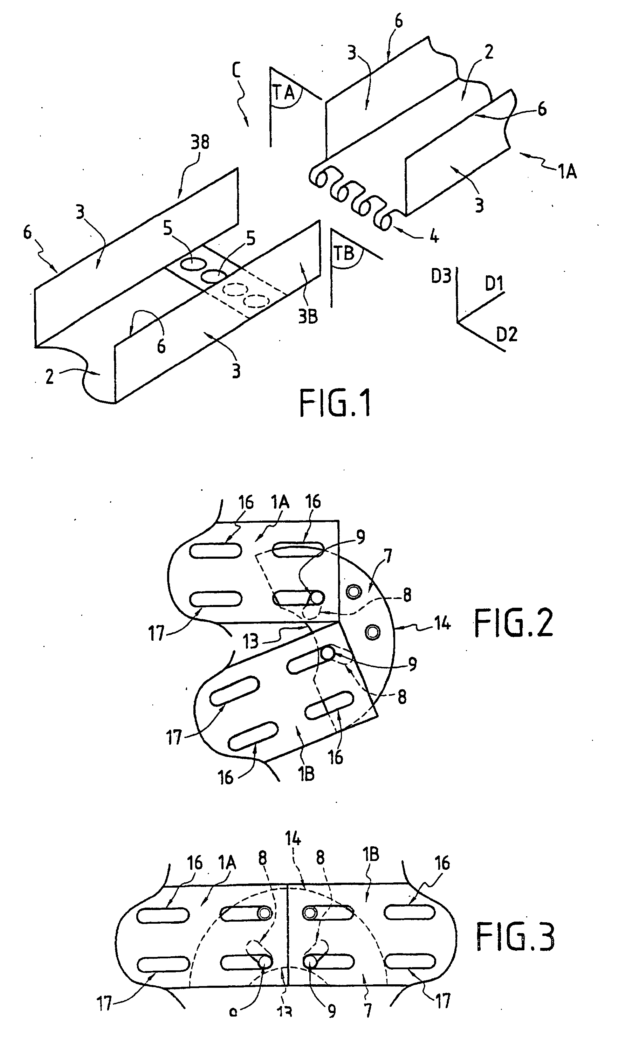

On se reporte maintenant à la figure 1.

Les parties extrêmes des tronçons de chemins de câbles 1A, 1B représentés en figure 1 comprennent chacune une paroi de fond 2 et deux ailes 3 sensiblement parallèles entre elles, et perpendiculaires à la paroi de fond 2.

Le tronçon référencé 1A est pourvu, sur sa paroi de fond 2, de saillies en forme de crochet 4, le tronçon référencé 1B étant pourvu sur sa paroi de fond de trous traversant 5.

Les saillies en forme de crochet 4 saillent au delà d'un plan TA transversal tangent au bord libre vertical des ailes 3 du tronçon 1A.

Les trous traversant 5 sont disposés sur la paroi de fond 2 du tronçon 1B, en retrait du plan TB transversal tangent au bord libre vertical des ailes 3 du tronçon 1B.

Ainsi, lorsque les crochets 4 sont placés dans les trous 5, et que les tronçons 1A, 1B sont alignés, les extrémités 3B des ailes du tronçon 1B sont en regard et en appui contre les ailes 3 du tronçon 1A.

Le frottement des ailes des tronçons 1A, 1B lors du pivotement relatif des tronçons l'un par rapport à l'autre, induit un couple de frottement, limitant les risques de mouvement brutal d'un tronçon par rapport à l'autre.

Des moyens d'encliquetage, ou tout autre moyen équivalent, assurent le verrouillage des tronçons 1A, 1B en position montée d'alignement longitudinal.

L'engagement des saillies 4 dans les trous traversant 5 permet la constitution d'une charnière C entre les deux tronçons de chemins de câbles 1A, 1B.

Dans le mode de réalisation de la figure 1, le tronçon 1A est pourvu de quatre saillies en forme de crochet 4, le tronçon 1B étant pourvu de quatre trous traversant 5 complémentaires.

Dans d'autres modes de réalisation, non représentés, le nombre de saillies et de trous peut être différent de quatre, par exemple, deux saillies et deux trous peuvent être prévus.

Le tronçon 1A peut être pourvu, sur son bord transversal opposé de celui représenté en figure 1, de trous traversant 5 tels que représentés pour le tronçon référencé 1B.

Dans une telle conception, chaque tronçon 1A, 1B est pourvu d'un bord transversal mâle sur lequel saille des crochets 4 et d'un bord transversal femelle sur lequel sont ménagés des trous traversant 5.

Dans un autre mode de réalisation, les tronçons 1A sont pourvus sur leurs deux bords transversaux opposés de saillies en forme de crochet 4, des tronçons complémentaires 1B, femelles, étant pourvus sur leurs deux bords transversaux opposés de trous traversant 5.

Les tronçons de chemins de câbles en feuille 1A, 1B peuvent être obtenus par pliage d'un flanc de tôle, perforé ou non, des nervures de renfort étant placées, le cas échéant, sur la paroi de fond et/ou les ailes latérales.

Les bords supérieurs longitudinaux 6 des ailes 3 sont avantageusement arrondis, par exemple par repli vers l'intérieur du chemin de câbles ou vers l'extérieur. Ce bord arrondi présente plusieurs avantages :
- il améliore la résistance mécanique en flexion du chemin de câble ;
- il protège les gaines de câbles des blessures éventuelles sur le bord extrême libre longitudinal des ailes, ce bord libre étant tourné vers la paroi de fond du tronçon, ou bien encore tourné à plus de 90°, vers la face interne de l'ailé de manière décrite dans le document FR-A-2 739 168 de la demanderesse ;
- il défini une gorge à ouverture tournée vers la paroi de fond des tronçons, gorge dans laquelle peut être logée une éclisse, par exemple en fil.

Dans d'autres modes de réalisation, non représentés, une charnière est rapportée sur les parois de fond 2 des tronçons 1A, 1B, chacun de ces tronçons 1A, 1B portant une platine de la charnière, une fiche ou broche traversant les chamons ou noeuds saillant de ces platines.

La charnière ainsi constituée pourra être de type américaine, à double feuillure, à noeud renvoyé, à congés, à briquet, à ressort simple ou double effet, à piano.

Lorsqu'une charnière à deux platines et broche et mise en place, les deux tronçons 1A, 1B peuvent être transportés et stockés repliés l'un sur l'autre.

Lorsque les charnons sont réalisés sur la tôle des tronçons de chemins de câbles, un axe ou fiche étant rapporté de sorte à constituer la charnière, les deux tronçons peuvent être transportés et stockés désaccouplés ou bien encore articulés et repliés l'un sur l'autre.

On se rapporte maintenant aux figures 2 à 10 qui illustrent un deuxième mode de réalisation.

Selon ce deuxième mode de réalisation, les ailes ou la paroi de fond de chaque tronçon de chemins de câbles 1A, 1B sont équipés d'une pièce 7 de liaison placée sur la face interne de ces ailes 3 ou de la paroi de fond 2.

Dans la première variante de réalisation des figures 2 à 5, cette pièce de liaison comprend :
- d'une part deux lumières 8 inclinées par rapport à un plan transversal de symétrie S, ces lumières 8 coopérant avec des axes 9 présentés par les tronçons pivotants 1A, 1B et
- d'autre part, au moins un téton 10 s'engageant dans une empreinte ou un trou traversant disposé sur les tronçons de chemins de câbles.

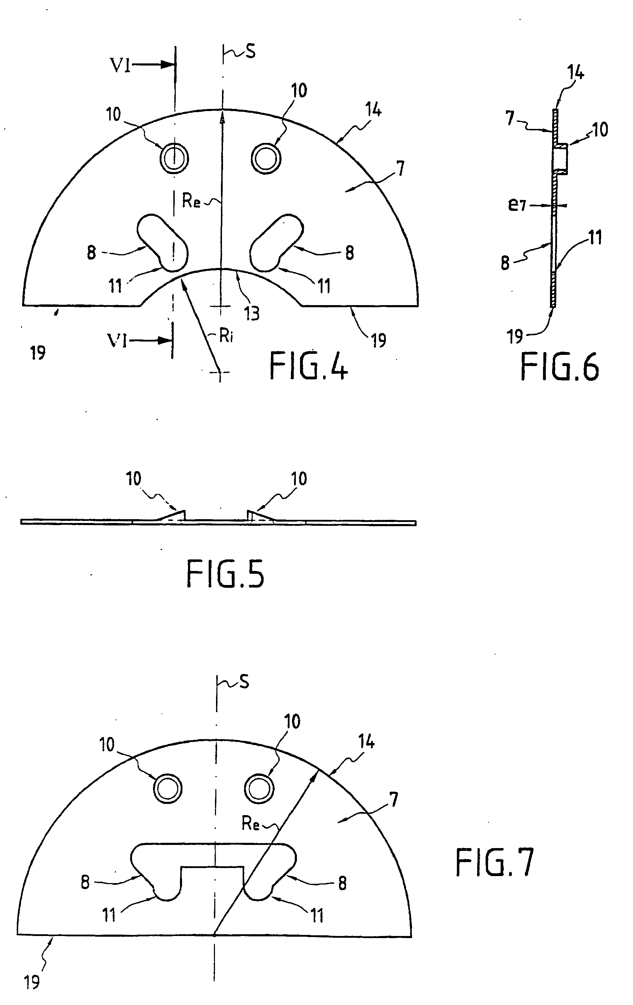

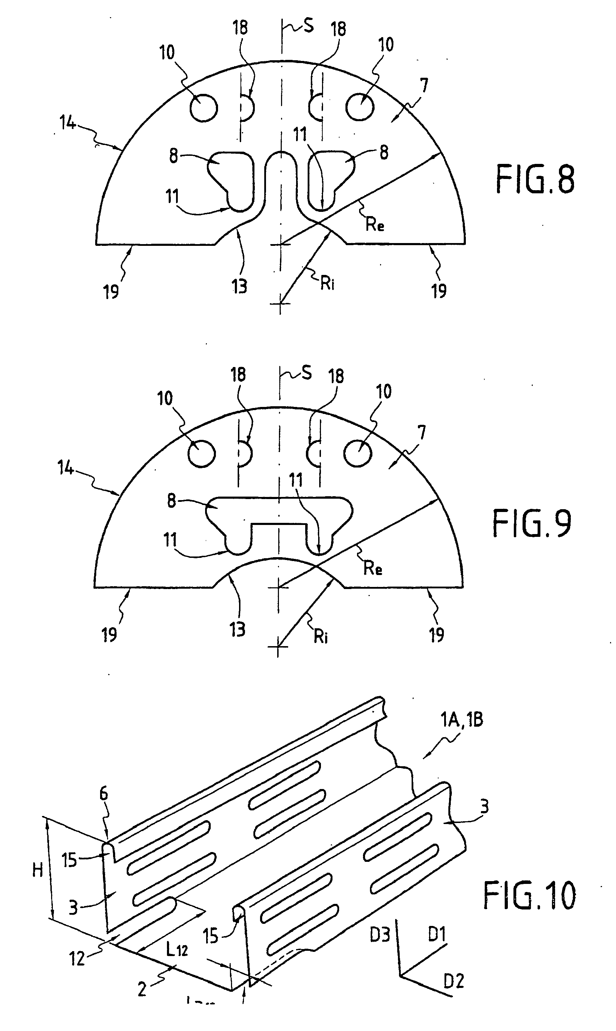

Dans les variantes de réalisation des figures 7 et 9, une seule lumière 8 reçoit chacun des deux axes 9 portés par les tronçons pivotants 1A,1B.

Dans le mode de réalisation représenté en figures 2 à 5, deux tétons 10 sont portés par la pièce de liaison 7, ces tétons 10 étant placés sensiblement symétriquement par rapport au plan transversal S.

Les tétons 10 sont par exemple obtenus par emboutissage de la plaque plane formant la pièce 7, comme il apparaît en figure 5.

La ou les lumières 8 sont oblongues et comprennent deux butées d'appui et de verrouillage 11, à savoir une butée 11 pour chacun des deux axes 9.

Selon une réalisation particulière, au moins une pièce de liaison et de verrouillage 7 est disposée sensiblement parallèlement à une aile 3 des deux tronçons 1A,1B, en face interne de cette aile 3.

Ainsi qu'il apparaît en figure 10, afin de permettre le mouvement de pivotement suivant sensiblement 180 DEG d'un tronçon 1A par rapport à l'autre 1B, chaque partie extrême des deux tronçons est pourvue d'au moins une gorge longitudinale 12 de passage pour la pièce de liaison 7.

La partie extrême de tronçon 1A,1B représentée en figure 10 est pourvue de deux gorges longitudinales 12 sensiblement identiques, chacune disposée dans la paroi de fond 2, au pied des ailes 3, ceci permettant le mouvement et le passage de pièces de liaison 7 contre l'une quelconque des deux ailes ou bien encore contre chacune des deux ailes 3.

Les pièces de liaison 7 sont sensiblement planes et ont une forme de demi-disque (figure 7) ou de demi-anneau (figures 2 à 4, figures 8 et 9).

Plus précisément, comme il apparaît en figures 4,8 et 9, les pièces de liaison en forme de demi-anneau comprennent un bord courbe inférieur central 13, de rayon de courbure Ri sensiblement constant, et un bord courbe supérieur 14, de rayon de courbure Re sensiblement constant, les centres de courbure C13 et C14 n'étant pas confondus mais avantageusement distants.

La longueur L12 des gorges de passage 12 peut ainsi être aussi réduite de possible, ce qui évite de fragiliser les tronçons de chemins de câbles.

La largeur la12 des gorges de passage 12 est sensiblement égale, au jeu fonctionnel près, à l'épaisseur e7 de la pièce de liaison.

Lorsque, comme représenté en figure 10, le bord longitudinal supérieur 6 des ailes 3 est ourlé avec repli à 180 DEG de sorte à former une rainure 15 à ouverture tournée vers la paroi de fond 2, le rayon de courbure Re sensiblement constant du bord courbe supérieur 14 de la pièce de liaison 7 est avantageusement sensiblement égal ou légèrement inférieur à la hauteur H séparant le fond de la rainure 15 de la paroi de base 2.

Le bord courbe 14 de la pièce de liaison 7 est ainsi logé et guidé dans la rainure longitudinale 15 lors du mouvement de pivotement d'un tronçon 1A par rapport à l'autre 1B.

L'engagement des tétons 10 dans les empreintes 16 des ailes 3 de chaque tronçon 1A, 1B conduit au verrouillage des deux tronçons 1A, 1B en alignement longitudinal tel que représenté en figure 3.

Dans le mode de réalisation représenté, les empreintes 16 sont des perforations longitudinales oblongues sensiblement identiques à celles référencées 17 dans lesquelles sont logés les axes d'articulation 9. Les perforations 16 et 17 sont sensiblement parallèles et identiques ce qui limite le nombre d'opérations de fabrication du chemin de câbles.

Une éclisse conventionnelle pourra, le cas échéant, être placée en face externe des ailes des tronçons 1A, 1B, pour renforcer encore le verrouillage en alignement longitudinal.

Les pièces de liaison 7 participent à diverses fonctions :
- une fonction d'articulation des tronçons 1A,1B depuis leur position de repli compact jusqu'à leur position alignée d'utilisation ;
- une fonction de verrouillage en position d'alignement longitudinal des deux tronçons ;
- une fonction de reprise de charge.

La reprise de charge est liée :
- à l'appui des axes 9 dans les trous longitudinaux 17 des ailes 3 des tronçons et contre les butées d'appui 11 des lumières 8 ;
- à l'appui de crans 18 dans des logements ou perforations des ailes des tronçons, ces crans 18 étant déformés de manière élastique lors du pivotement d'un tronçon 1A par rapport à l'autre 1B, le bord supérieur longitudinal ourlé des ailes formant la rainure de guidage pour la pièce de liaison ;
- à l'appui éventuel du bord inférieur 19 contre la paroi de fond 2 des tronçons.

Les crans 18 et tétons 10 des pièces de liaison 7 représentées en figure 8 et 9 sont disposés en deux paires. Dans chacune de ces paires, le cran 18 est écarté du téton d'une distance telle qu'ils viennent tous deux se loger dans une seule perforation en boutonnière 16 d'un des tronçons 1A,1B.

Lorsque les deux tronçons 1A,1B sont en position de repli l'un contre l'autre, pour leur stockage ou leur transport, des moyens de maintien temporaire en position assurent, le cas échéant, que les deux tronçons 1A,1B ne puissent s'écarter et pivoter inopinément l'un par rapport à l'autre. Ainsi, les parois de fond des tronçons 1A,1B comprennent par exemple des saillies de léger encliquetage mutuel.

Il est à noter que la pièce de liaison ne dépasse sensiblement pas au delà du plan tangent transversal aux extrémités des tronçons 1A,1B, lorsque ces tronçons sont repliés l'un contre l'autre, la pièce de liaison passant au travers des gorges longitudinales 12.

Les pièces de liaison peuvent être placées sensiblement parallèlement à l'une ou aux deux ailes des tronçons. Dans une autre réalisation, une pièce de liaison telle que représentée sur les figures 4 à 9 est placée sensiblement parallèlement à la paroi de fond 2 des deux tronçons qui sont ainsi montés articulés en rotation autour d'un axe sensiblement perpendiculaire à cette paroi de fond. Une gorge longitudinale analogue à celle vue en figure 10 s'étend alors sur une hauteur sensiblement égale, au jeu fonctionnel près, à l'épaisseur de la pièce de liaison. Des trous traversant, analogues à ceux références 16,17 en figures 2 et 3, sont disposés dans les parois de fond des tronçons et permettent le verrouillage en alignement longitudinal des deux tronçons, d'une manière semblable à celle qui vient d'être décrite.

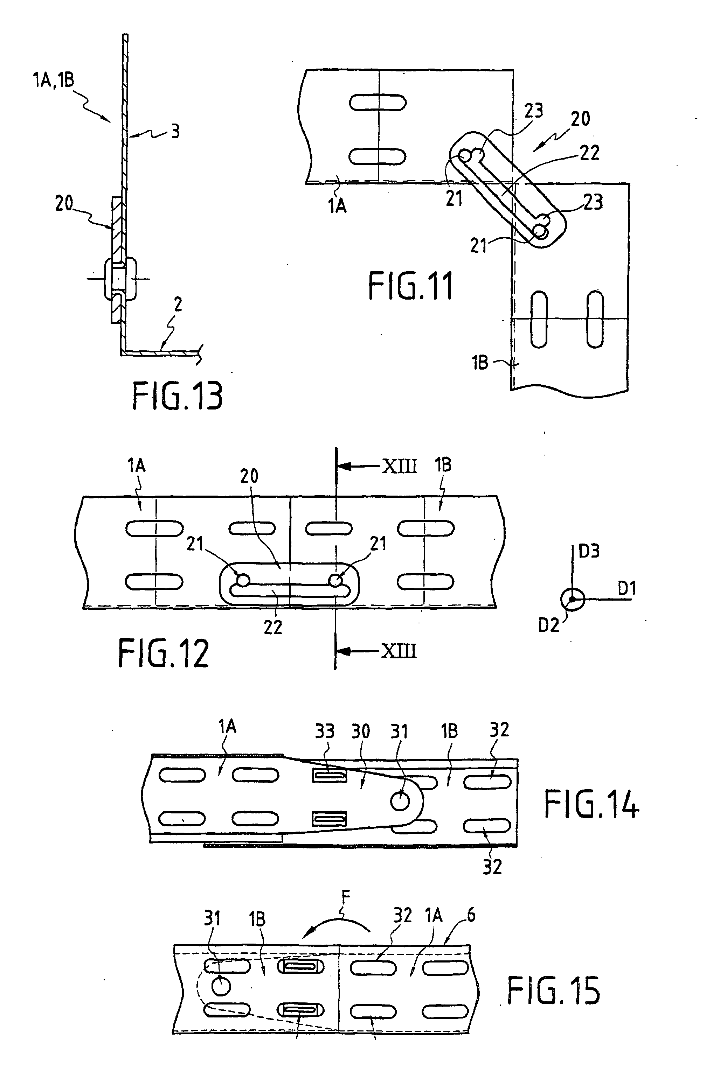

On se rapporte maintenant aux figures 11 à 13 qui illustrent un troisième mode de réalisation.

Selon ce mode de réalisation, au moins une aile des tronçons de chemin de câbles 1A,1B est équipé d'une pièce de liaison 20 montée sur la face externe des tronçons 1A, 1B.

Chacun des tronçons 1A, 1B porte sur ses ailes un axe 21 en saillie externe.

Les pièces de liaison 20 présentent une lumière 22 allongée dans laquelle peuvent coulisser les axes 21 et déboucher dans des encoches 23.

La distance entre les encoches 23 est sensiblement égale à l'écartement entre les axes 21, écartement mesuré lorsque les tronçons 1A, 1B sont verrouillés en position d'alignement longitudinal tel que représenté en figure 12.

La longueur de la lumière 22 est supérieure à la distance entre les encoches 23, de sorte à permettre l'articulation des deux tronçons 1A, 1B.

Pendant le pivotement, les axes 21 se déplacent dans la lumière 22 puis se placent dans les encoches 23, permettant le verrouillage.

La pièce de liaison 20 est placée en partie basse des tronçons 1A, 1B, le verrouillage étant ainsi obtenu par le simple poids.

Un verrouillage complémentaire à l'aide d'une éclisse peut être réalisé le cas échéant.

Les axes 21 peuvent être obtenus par rivetage sur un embouti réalisé dans chaque aile 3 des tronçons 1A, 1B.

On se reporte maintenant aux figures 14 à 17 qui illustrent un quatrième mode de réalisation.

Dans ce mode de réalisation, les ailes 3 d'un premier tronçon de chemin de câbles 1A sont chacune pourvues d'une saillie longitudinale 30 intégrée ou rapportée formant support pour un axe transversal 31.

Lorsque les deux tronçons 1A,1B sont dans leur position extrême déployée et alignés longitudinalement l'un avec l'autre, ainsi qu'il apparaît en figure 15, des moyens de verrouillage sont prévus pour inhiber le mouvement de pivotement selon la flèche F.

Un mode de réalisation de ces moyens de verrouillage est représenté sur cette figure 15. Ces moyens de verrouillage comprennent tout d'abord des réservations ou trous traversant 32, analogues à ceux référencés 16,17 en figures 2 et 3, et qui ne seront donc pas décrits à nouveau.

Les moyens de verrouillage comprennent par ailleurs des saillies 33, disposés sur les ailes d'un premier tronçon et venant se loger en butée dans les trous traversant portés par les ailes du deuxième tronçon.

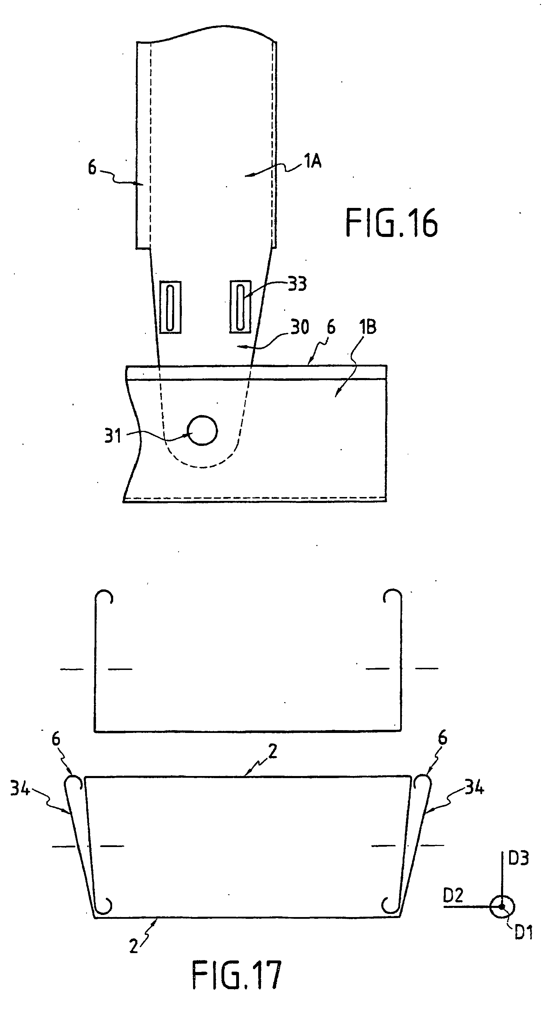

Lorsque les deux tronçons 1A,1B sont livrés ou stockés, les ailes 34 du deuxième tronçon sont déformées par l'insertion à force du premier tronçon, ou vice-versa, ainsi qu'il apparaît en figure 17.

Dans le mode de réalisation représenté, cette déformation est liée à la combinaison suivante :
- les tronçons de chemins de câbles en feuille ont un profil transversal en U, les deux ailes étant sensiblement perpendiculaires à la paroi de fond ;
- le bord longitudinal haut des ailes est ourlé ou replié vers l'intérieur des tronçons, les avantages de ce bord longitudinal ourlé ayant été présenté auparavant.

Bien évidemment, la déformation des ailes 34 du tronçon pourra être maintenue élastique.

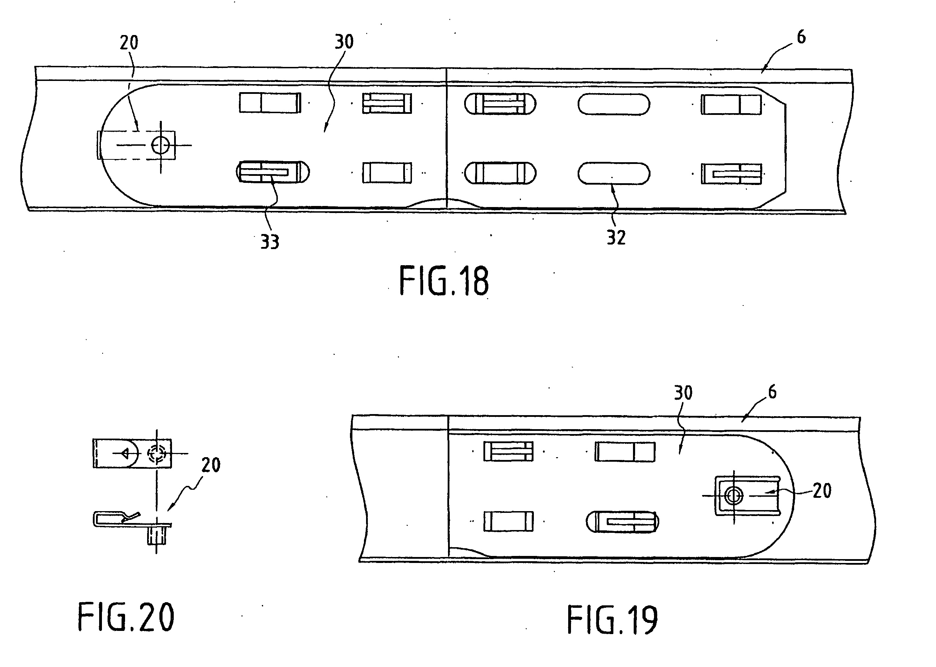

L'axe 31 doit permettre le dégagement des deux tronçons, depuis leur position de stockage vue en figure 17, jusqu'à la position de verrouillage en alignement longitudinal vue en figure 15. L'axe 31 présente à cette fin une élasticité suivant son axe longitudinal, élasticité obtenue par exemple par un montage type boulon/ressort, ou bien encore par un montage type lamelle élastique intégrée (voir référence 20 en figure 19) ou rapportée (voir référence 20 en figures 18 et 20).

Un tel montage est présenté dans les figures 18 à 20.

En variante ou en combinaison, les bords libres hauts des ailes des tronçons pourront être dépourvus de replis ou être ourlés vers l'extérieur.

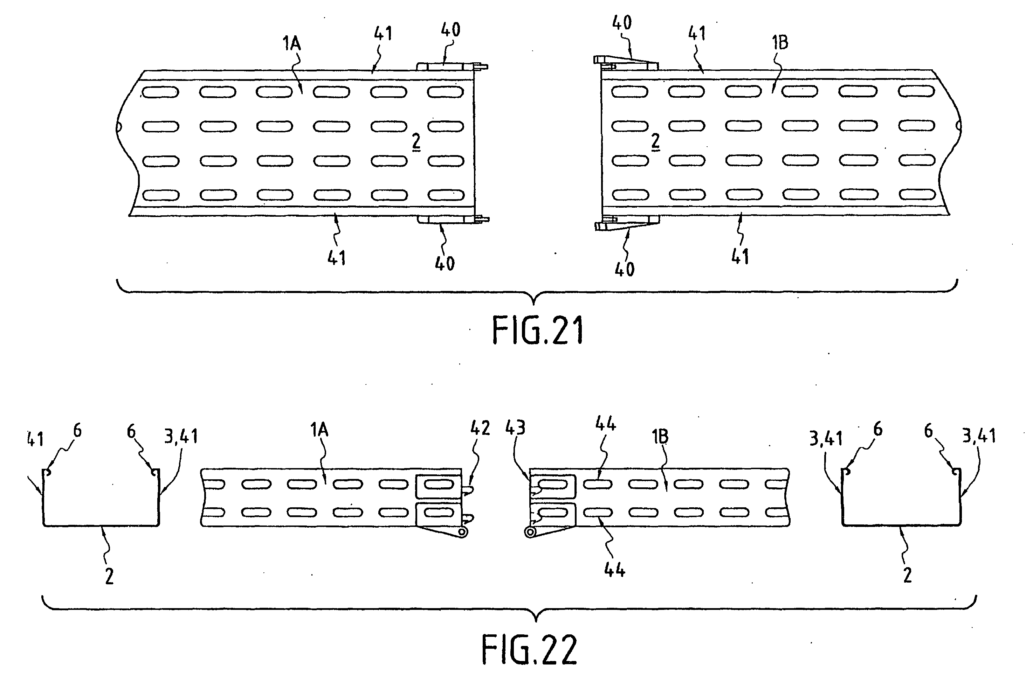

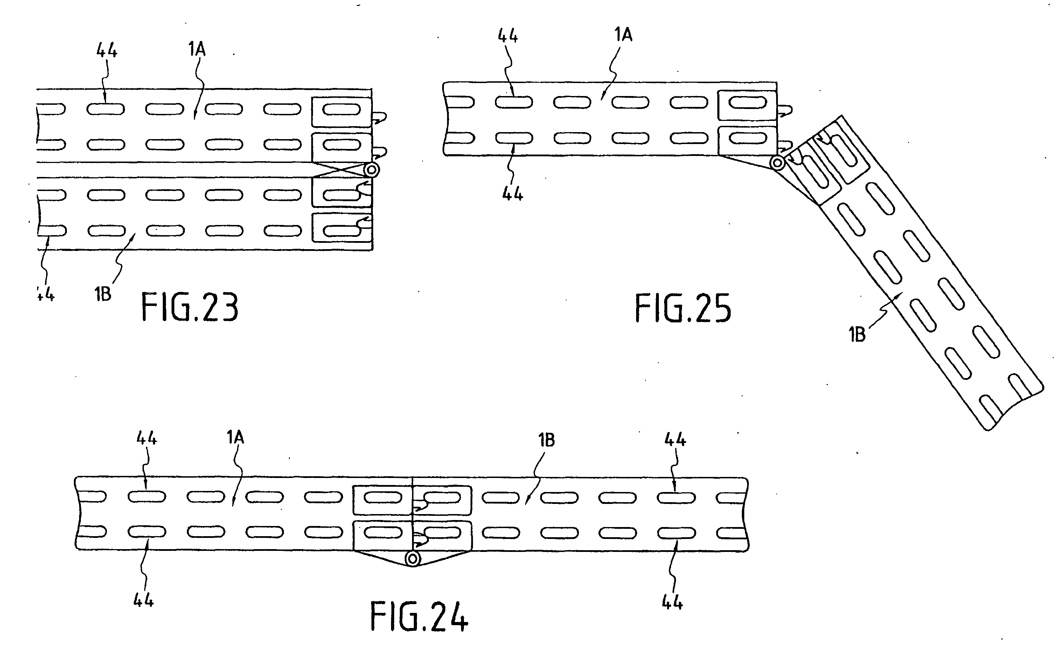

On se reporte maintenant aux figures 21 à 25 qui illustrent un sixième mode de réalisation.

Les tronçons de chemins de câbles en feuille 1A,1B sont chacun pourvus de saillies supports d'axes 40 disposées sur les ailes 41 des tronçons.

Des saillies 42 longitudinales en forme de crochets ou harpons permettent l'encliquetage et le verrouillage en position d'alignement longitudinal des deux tronçons 1A,1B, les saillies 42 pénétrant dans des réservations 43.

Les axes 40 et les saillies 42, ainsi que les réservations 43 sont portés, dans le mode de réalisation des figures 21 à 24, par des pièces rapportées ou venues de matière, sur les ailes 41 des tronçons de chemins de câbles, ces ailes étant pourvues de trous traversant 44 semblables à ceux référencés 16,17 en figures 2 et 3, et d'un bord longitudinal haut ourlé 6, dont les avantages ont été présentés auparavant.

La paroi de fond 2 des tronçons 1A,1B, dans le mode de réalisation représenté en figure 21, est pourvue de perforations de forme et répartition identiques à celles des ailes 41, ceci permettant de réduire les frais de fabrication. Bien évidemment, le cas échéant et en fonction des besoins, la paroi de fond des tronçons 1A,1B pourra être pourvue de perforations disposées suivant un autre motif, comprenant par exemple des trous rond et/ou des trous oblongs transversaux.

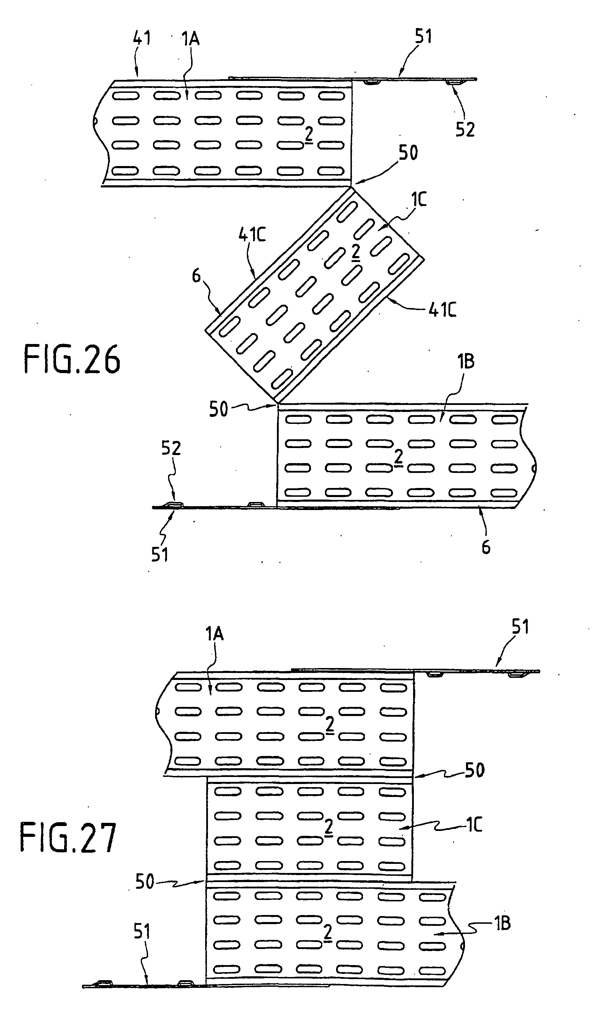

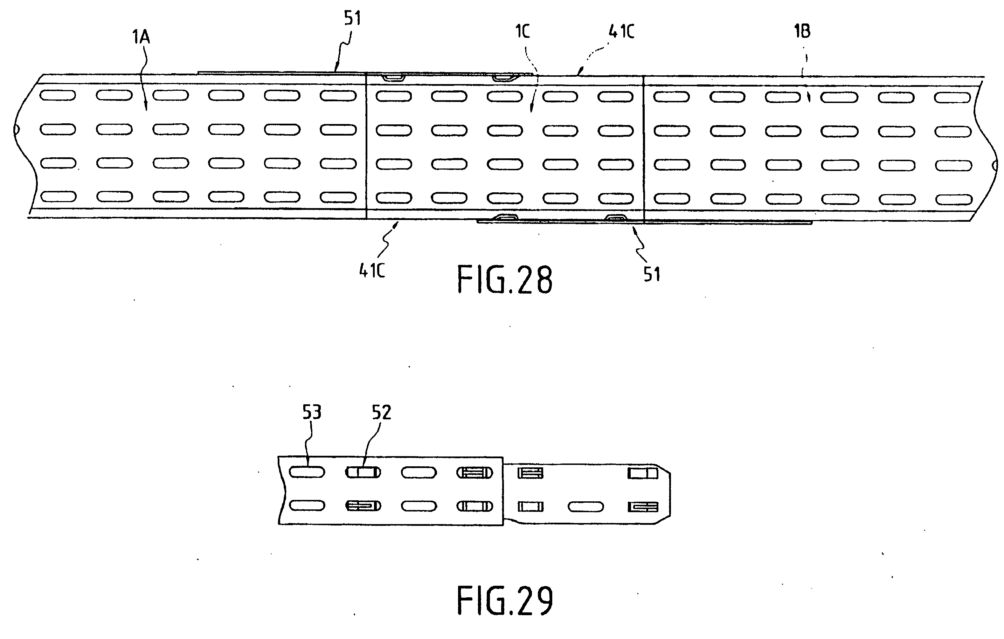

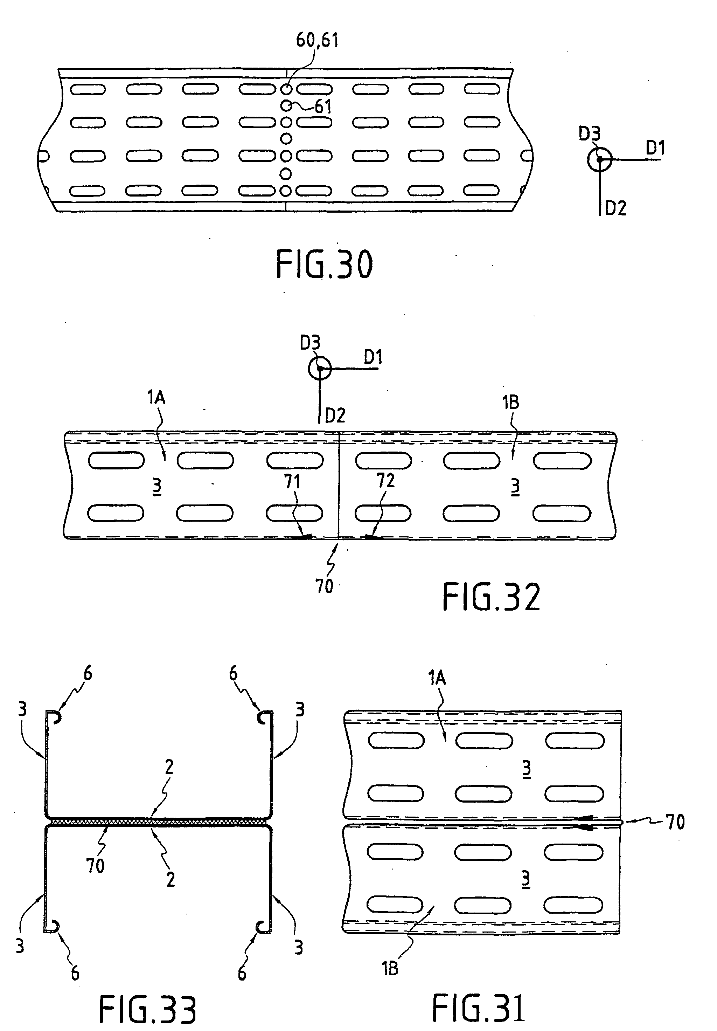

Dans le septième mode de réalisation représenté en figures 26 à 29, l'articulation des tronçons de chemins de câbles 1A,1B est assurée par des moyens tels que charnières, amincissement (tel que représenté en figure 30, articulation telle que représentée en figure 1, disposées sur les ailes 41 de ces tronçons 1A, 1B et les reliant à un tronçon intermédiaire 1C.

Dans le mode de réalisation représenté, les trois tronçons 1A, 1B et 1C comprennent tous une paroi de fond 2 et deux ailes 41 perforés à bords haut ourlés 6, tels que présentés auparavant. Il est entendu toutefois que les trois tronçons peuvent, le cas échéant et en fonction des besoins, être pourvus de parois de fond différentes pour ce qui est de leur perforation ou de leur type (tôle pleine ou ajourée, métal déployé, treillis soudé).

D'une manière avantageuse, d'un tronçon à l'autre, la charnière 50 est disposée alternativement sur l'aile droite et gauche de sorte à permettre un repliement en Z lors du stockage ou du transport.

Les moyens de verrouillage des tronçons 1A,1B et 1C en position d'alignement longitudinal représentées en figures 26 à 29 sont de type éclisses saillantes 51 ou télescopiques pourvues de tétons, pattes flexibles ou saillies 52 aptes et disposées pour venir se loger dans les perforations 53 des ailes 41C du tronçon 1C.

Dans le mode de réalisation de la figure 30, une ligne d'affaiblissement transversal 60 permet le dépliage d'un tronçon de chemins de câbles suivant un angle d'environ 180 degrés.

Cette ligne d'affaiblissement est par exemple formée par des perforations 61, de diverses géométries (ronds, carrés, rectangles, oblongs), alignées et/ou un poinçonnement ou la disposition d'une gorge.

Des moyens de verrouillage, tels que ceux référencés 42,43 en figure 22 ou référencés 30 et 33 en figures 14 et 18, sont placés sur au moins une aile du chemin de câbles, dans une réalisation.

On se reporte maintenant aux figures 31 à 33.

Les tronçons de chemin de câbles 1A,1B représentés sur ces figures 31 à 33 sont articulés entre eux et reliés par une lame élastique 70 apte à être pliée à 180° environ.

Dans un mode de mise en oeuvre, les parties extrêmes de cette lame 70 sont collées sur les parois de fond 2 ou sur une aile des tronçons 1A,1B.

Dans un autre mode de réalisation, les parties extrêmes 71,72 de cette lame 70 sont en forme de crochet ou harpon et sont encliquetées dans des logements disposés dans les parois de fond ou une aile des deux tronçons 1A,1B.

La lame est avantageusement en un matériau à élasticité élevée, tel qu'élastomère ou acier à ressort.

Dans la réalisation représentée en figure 33, cette lame 70 s'étend sur une largeur sensiblement égale à celle des parois de fond des tronçons.

Le cas échéant, notamment lorsque les tronçons sont de grande largeur, par exemple supérieure à trois cents mm, plusieurs lames élastiques sont employées.

Le verrouillage en alignement longitudinal des tronçons 1A,1B pourra être obtenu par l'emploi d'une ou deux pièces de liaison 7 telles que représentées en figures 4, ou en figures 7 à 9, 11 à 13.

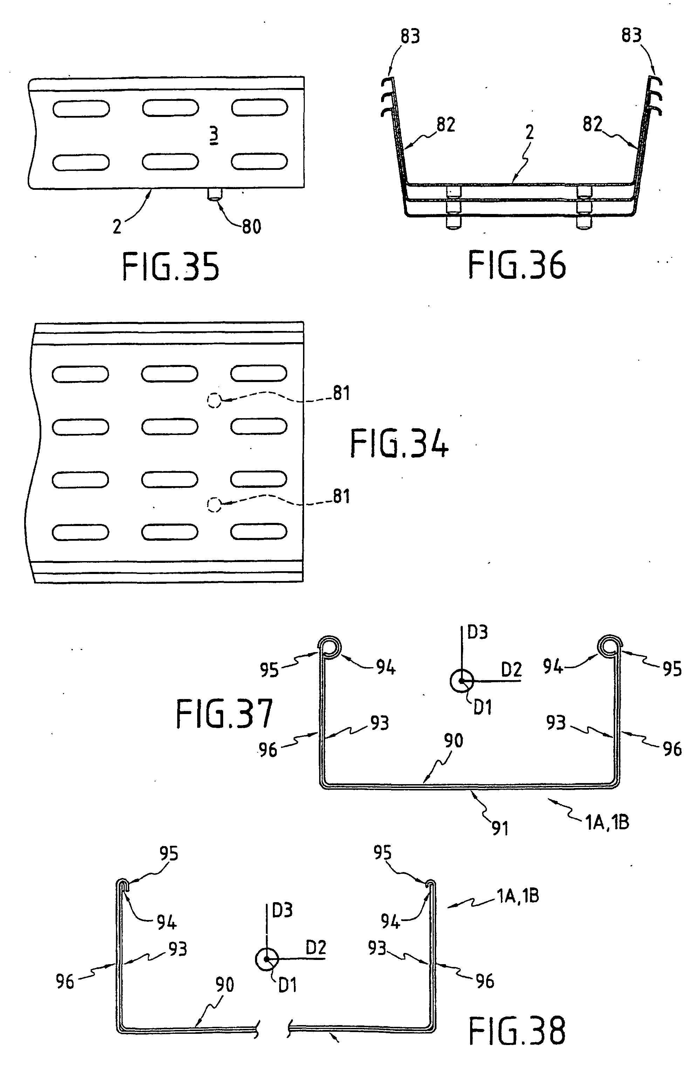

Dans le mode de réalisation des figures 34 à 36, les tronçons de chemins de câbles en feuille sont pourvus, sur leur paroi de fond 2, de saillies 80 venant en appui, lorsque les tronçons sont empilés, dans de légères cuvettes 81.

Deux zones d'appui 81 apparaissent en figure 34. Le nombre des saillies 80 peut être supérieur à deux, par exemple lorsque les tronçons sont de grande largeur.

Ces saillies 80 et cuvettes 81 assurent à la fois :
- un placement longitudinal précis des tronçons les uns dans les autres, leur glissement longitudinal relatif étant évité lors du transport ;
- une mise à distance des parois de fond 2 des tronçons empilés, réduisant ainsi les risques de coincement et facilitant le désempilement.

Les saillies et cuvettes 80 ,81 peuvent être combinées aux articulations représentées en figure 1 notamment.

De sorte à faciliter l'empilement, les ailes 82 des tronçons sont inclinées par rapport à la verticale et le bord longitudinal haut 83 des ailes 82 est ourlé vers l'extérieur.

Les figures 37 à 40 illustrent des réalisations dans lesquelles les tronçons de chemins de câbles 1A,1B sont coulissants l'un par rapport à l'autre. Le tronçon interne 90 peut être sensiblement homothétique au tronçon externe 91, comme représenté en figures 37 et 38, les ailes des tronçons étant :
- sensiblement planes et verticales, à bord libre ourlé vers l'intérieur ou l'extérieur des tronçons ;
- pourvues d'un décrochement 92 et à bord libre haut non ourlé, le décrochement inhibant le mouvement vertical d'un tronçon par rapport à l'autre.

Plus précisément, dans le mode de réalisation de la figure 37, le tronçon interne 90 comprend deux ailes 93 sensiblement symétriques, pourvues d'un bord longitudinal haut ourlé en C, référencé 94.

Ce bord longitudinal ourlé 94 présente tout d'abord tous les avantages exposés précédemment en référence au bord 6 du mode de réalisation de la figure 1.

Ce bord longitudinal ourlé 94 forme, de plus, glissière de guidage en coulissement pour le bord longitudinal haut ourlé 95 des ailes 96 du tronçon externe 91.

Le bord longitudinal haut ourlé 95 présente bien entendu lui aussi tous les avantages exposés précédemment en référence au bord 6 du mode de réalisation de la figure 1 (rigidité accrue pour le chemin de câbles, protection des gaines de câbles lors de la pose, notamment).

Le bord longitudinal 95 des ailes 96 du tronçon externe 91 est placé coulissant à l'intérieur du bord longitudinal 94 des ailes 93 du tronçon interne 90.

Dans le mode de réalisation de la figure 38, les bords longitudinaux 94,95 des tronçons interne et externe sont :
- recourbés sur sensiblement 180 degrés, le bord 94 du tronçon interne 90 étant logé coulissant dans la rainure du bord 95 du tronçon externe 91 (variante représenté en partie gauche de la figure 38) ;
- respectivement non ourlé pour le bord 94 du tronçon interne 90 et recourbé sur sensiblement 180 degrés pour le bord 95 du tronçon externe 91, le bord 94 du tronçon interne 90 étant logé coulissant dans la rainure définie par le bord ourlé 95 du tronçon externe 91 (variante représentée en partie droite de la figure 38).

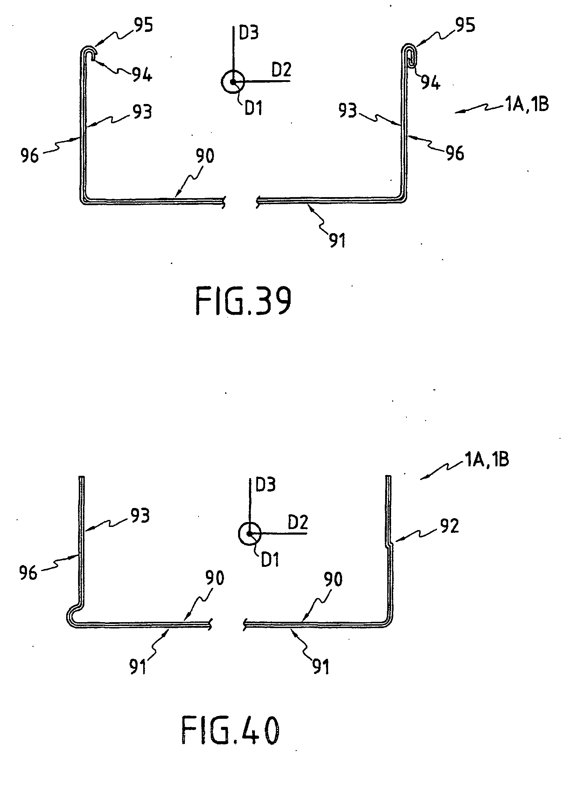

Dans le mode de réalisation de la figure 39, le bord longitudinal haut 94 des ailes 93 du tronçon interne 90 n'est pas replié pour être plaqué contre la face interne de l'aile 93 (contrairement à la réalisation de la figure 38, partie gauche), mais forme une gorge longitudinale ouverte vers le bas et sensiblement homothétique à celle formée par le bord ourlé 95 des ailes 96 du tronçon externe 91.

Les bords ourlés 94,95 peuvent être tournés vers l'intérieur (figure 39, partie gauche) ou vers l'extérieur (figure 39, partie droite) des tronçons 1A,1B.

La figure 40 illustre la disposition d'un ressaut 92 sur une aile des tronçons 90,91, ou bien encore à la base 97 de ces ailes 93,96. Ce ressaut ou décrochement longitudinal 92,97 assure un guidage en coulissement des tronçons et inhibe le mouvement vertical d'un tronçon par rapport à l'autre.

Il n'est ainsi pas obligatoire de prévoir un bord supérieur ourlé pour les ailes des tronçons coulissants.

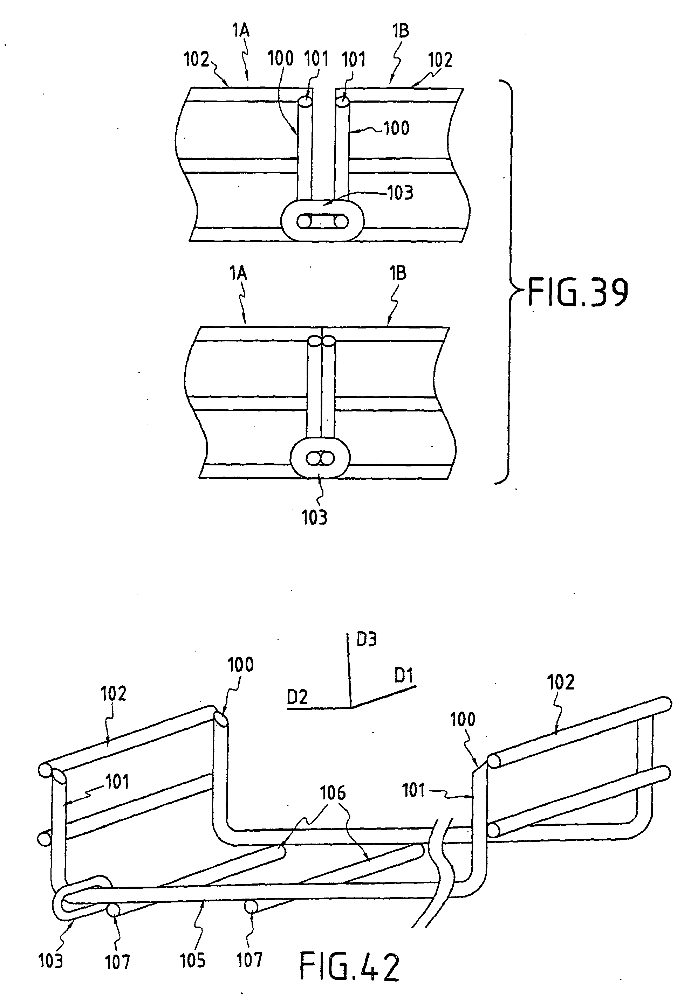

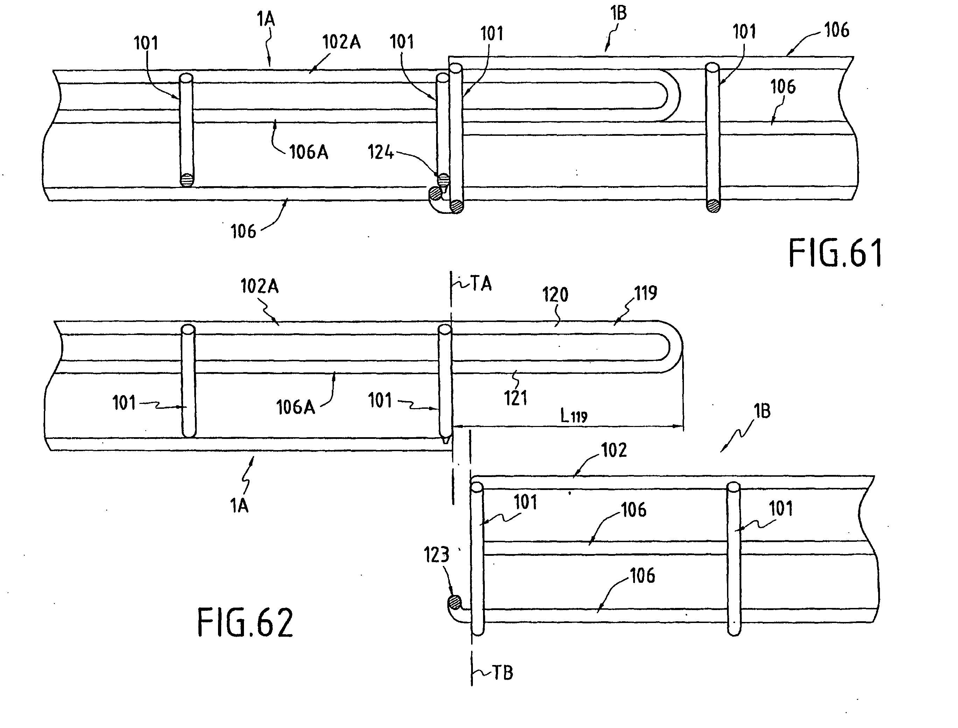

On se rapporte maintenant aux figures 41 et 62.

Ainsi qu'il a été dit précédemment, les chemins de câbles à fil comprennent conventionnellement des fils de chaîne, longitudinaux, et des fils de trame, transversaux, disposés de place en place.

En moyenne, par rapport aux chemins de câbles en feuille, les chemins de câbles à fil conventionnels présentent des propriétés considérées comme favorables telles que :
- facilité de mise en forme dans les virages et les changements de direction ;
- aération des câbles ;
- masse par mètre réduite,
et des propriétés pouvant apparaître défavorables, dans certaines applications :
- résistance mécanique à la charge relativement plus faibles ;
- surface de support pour les câbles plus faible.

Pour tenir compte de ces inconvénients, il est à noter que l'invention concerne également les chemins de câbles :
- dont les ailes sont en treillis de fils, la paroi de fond étant en métal déployé ou en feuille pleine ou perforée ;
- et/ou pourvus d'un habillage de renfort et de support de câbles tel qu'il va être décrit ci-dessous.

L'habillage comprend au moins une plaque fixée en face interne ou externe des chemins de câbles à fil. En d'autres termes, ladite plaque pourra être fixée sur les fils de chaîne et/ou les fils de trame, la disposition des fils de trame en face externe ou en face interne par rapport à une nappe de fils de chaîne, ou bien encore entre deux nappes de fils de chaîne étant en soi connue.

Dans une mise en oeuvre, l'habillage comprend au moins une plaque couvrant au moins en partie la paroi de fond des chemins de câbles, en étant par exemple encliquetée sur fils de trame et/ou fils de chaîne.

Dans une autre mise en oeuvre, l'habillage comprend au moins une plaque couvrant au moins en partie la paroi de fond du chemin de câbles et au moins en partie une des ailes ou les deux ailes du chemin de câbles. A cette fin, l'habillage comprend au moins une plaque cintrée ou courbée, ou bien encore moulée, de sorte à venir épouser la courbure des fils de trame, entre aile et paroi dé fond du chemin de câbles, cette plaque étant soudée, collée, ou encliquetée sur fils de trame et/ou fils de chaîne.

L'encliquetage est obtenu par la disposition d'au moins une gorge et/ou des pattes flexibles dans la plaque d'habillage, cette plaque pouvant être en métal embouti ou profilé, ou bien encore en polymère thermoformé ou moulé, ou tout autre matériau formable en feuille, notamment en composite.

Dans un mode de réalisation, le chemin de câbles à fil comprend, sur au moins une partie de sa longueur, un habillage recouvrant sensiblement la paroi de fond et les deux ailes.

Les plaques d'habillage sont pourvues, dans une réalisation, de bossages formant surface de support pour les câbles logés dans la cavité du chemin de câbles, ces bossages augmentant la rigidité du chemin de câbles.

L'habillage de renfort comporte, dans une réalisation avantageuse, des trous traversant dont le nombre et la disposition sont adaptés, le cas échéant, à un ou plusieurs des objectifs suivants :
- préserver l'aérations des câbles disposés dans le chemin de câbles ;
- permettre le passage de colliers de serrage des câbles ;
- permettre le passage d'éclisses ;
- permettre le passage de tiges filetées, de boulons ou autres moyens de fixation des tronçons de chemins de câbles sur des consoles ou des pendards.

A titre d'exemple, les plaques d'habillage, de renfort et de support de câbles comportent des évidements allongés longitudinalement en boutonnière et disposés transversalement en deux ou plusieurs rangées.

Les trous traversant comprennent, dans une mise en oeuvre particulière, des passages obtenus par perforation d'opercules.

L'habillage tel que présenté ci-dessus permet, comme son nom l'indique, de masquer les câbles contenus dans le chemin de câbles en treillis de fils, et procure en même temps une résistance mécanique accrue à la charge, ainsi qu'une plus grande surface de support pour les câbles, par rapport au treillis de fils nu, facilitant le glissement des câbles lors de leur mise en place ou d'opérations de maintenance.

Des perforations disposées dans l'habillage de renfort et de support de câbles préservent l'aération des câbles logés dans le chemin de câbles et permettent de conserver une masse par mètre relativement faible pour le chemin de câbles.

L'habillage peut être pourvu de moyens de repère et de signalisation, notamment de la fonction des câbles contenus dans le chemin de câbles. Ces moyens de repère incluent par exemple une impression ou une gravure sur au moins une plaque d'habillage, ou bien encore une coloration particulière pour l'une des plaque d'habillage, notamment lorsque cette plaque est en polymère ou en composite teinté dans la masse.

De sorte à préserver la facilité de mise en forme dans les virages et les changements de direction des chemins de câbles à fil, les plaques d'habillage sont avantageusement pliables dans le plan et/ou pliable hors plan.

Le caractère pliable est obtenu par exemple par la disposition de lignes de perforations ou d'amincissement, permettant l'adaptation aux changements de niveau par courbure hors plan du chemin de câbles, la paroi de fond du chemin de câble étant concave ou convexe.

Le caractère pliable dans le plan d'une plaque d'habillage et de renfort, lorsque la paroi de fond du chemin de câble reste sensiblement plane mais change de direction, peut être obtenu par exemple par disposition de découpes en triangles sur au moins un bord longitudinal de cette plaque d'habillage, les bords en V de ces découpes venant se chevaucher lorsque la plaque est cintrée.

La mise en place de plaques d'habillage, de renfort et de soutien de câbles telles que présentées ci-dessus permet l'obtention de chemins de câbles présentant un excellent compromis entre les propriétés des chemins de câbles en feuille et celles des chemins de câbles à fil.

D'une manière avantageuse, les dispositions décrites en référence aux figures 1 à 40, peuvent être celles de pièces d'habillage et de renfort fixées sur des tronçons de chemins de câbles à fil nus.

Ainsi, par exemple :
- les deux pièces représentées en figure 1 peuvent être des plaques en U fixées chacune sur une partie extrême de tronçon de chemin de câbles à fil, assurant ainsi, en plus des fonction d'articulation de ces tronçons de chemins de câbles à fil, des fonctions d'habillage, de repérage, de soutien de câbles, et de renfort mécanique pour ces tronçons de chemins de câbles à fil ;
- deux plaques d'habillage et de renfort , de formes telles que représentées en figure 2,3,10, sont fixées, par exemple encliquetées sur les ailes en treillis de fils de deux tronçons de chemins de câbles à fil, ces plaques d'habillage étant aptes à être reliées par une pièce d'articulation et verrouillage telle que représentée en figures 4 à 9.

Dans les figures 41 à 62, les bords libres 100 des fils de trame 101 sont biseautés et les ailes des tronçons 1A,1B portent ainsi un fil longitudinal haut dit fil de rive 102. Cette disposition permet d'éviter les blessures des gaines de câbles lors de la pose, ou les blessures pour les mains des poseurs.

Il est entendu toutefois que d'autres mesures peuvent être prises pour éviter ces risques de blessures. On peut notamment se reporter aux documents FR-2 617 341, FR-2 634 600, FR-2 697 313, EP-298 825, EP-352 191, DE-43 36 168, ainsi qu'aux dispositions présentées dans le document EP-1 150 407 de la demanderesse.

Dans les modes de réalisation des figures 41 à 45, une boucle d'articulation 103 ou une bande d'articulation 104 relie les fils de trame extrêmes des tronçons 1A,1B, sur leur segments de base 105 de paroi de fond des tronçons 1A,1B.

Les fils de chaîne 106 présentent avantageusement des bords transversaux 107 biseautés, de sorte à ne pas entraver le mouvement de pivotement d'un tronçon 1A par rapport à l'autre 1B. Cette disposition permet l'emploi d'une boucle d'articulation 103 ou d'une bande d'articulation 104 de largeur réduite, les fils de trame extrême des tronçons 1A,1B étant sensiblement en contact ou à faible distance l'un de l'autre, comme représenté en partie basse de la figure 41. Il est ainsi possible d'employer des moyens d'éclissage conventionnels pour renforcer le verrouillage en alignement longitudinal des tronçons 1A,1B.

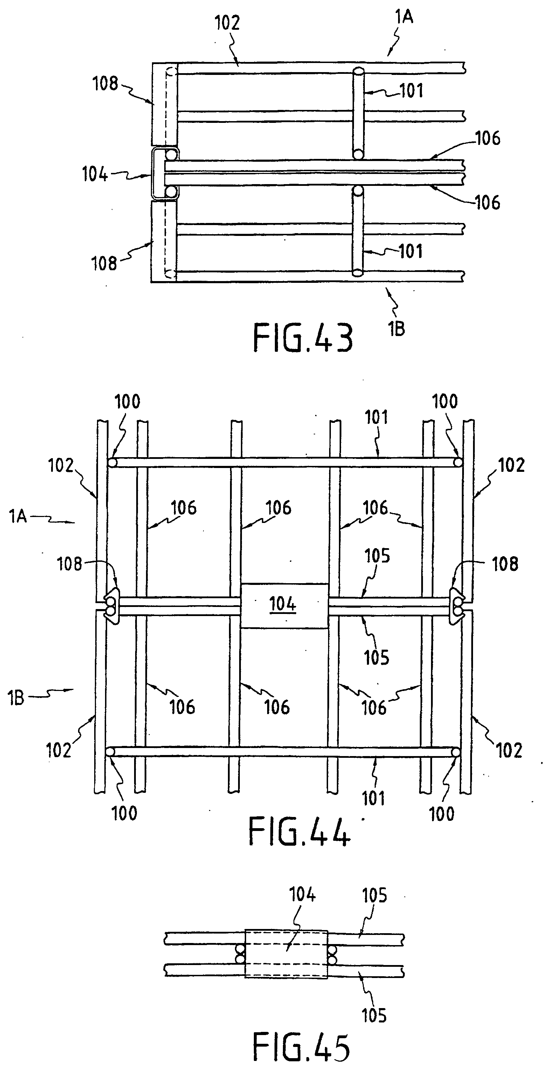

Des moyens de verrouillage en position d'alignement sont représentés en figures 44 à 46 et comprennent deux bandes élastiques 108, chacune de ces deux bandes 108 venant enserrer les fils de trame extrêmes des tronçons 1A,1B placés en vis à vis, ces bandes 108 étant disposées sur chacune des deux ailes des tronçons 1A,1B.

Le verrouillage est ainsi obtenu par encliquetage, suite à déformation élastique des bandes 108.

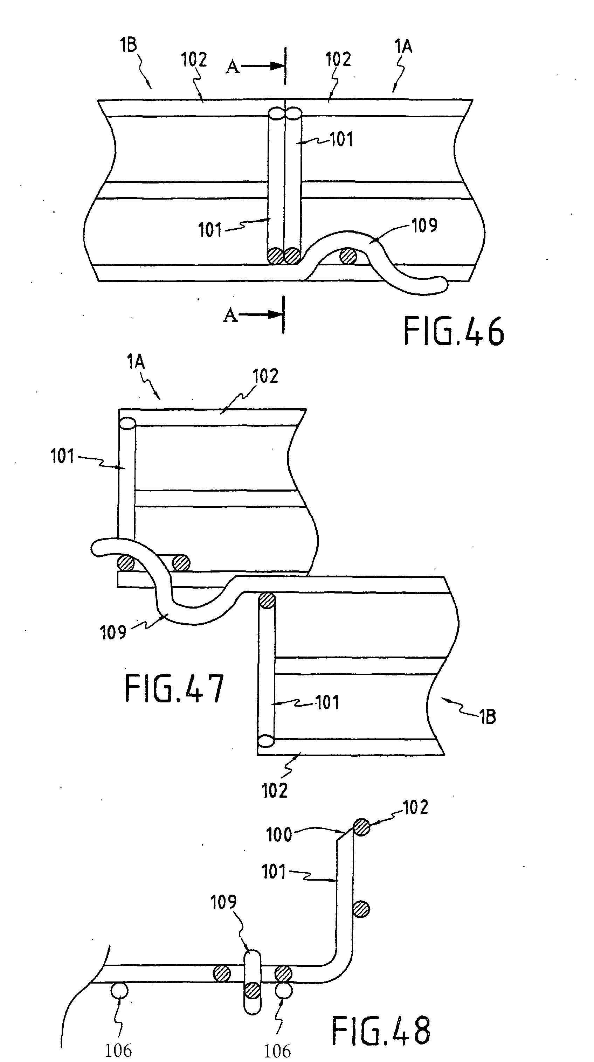

Dans la réalisation des figures 46 à 48, l'articulation en pivotement des deux tronçons 1A,1B depuis leur position extrême de repli l'un sur l'autre (figure 47), jusqu'à leur position extrême d'alignement longitudinal (figure 46) est assuré par une courbure longitudinale en S référencée 109, pour des parties extrêmes saillantes de fils de chaîne d'au moins un des tronçons 1B.

Ces parties en S de fils de chaîne saillent au delà du fil de trame extrême transversal d'un premier des deux tronçons 1B et viennent en appui contre deux fils transversaux successifs du deuxième tronçon, comme représenté en figure 46.

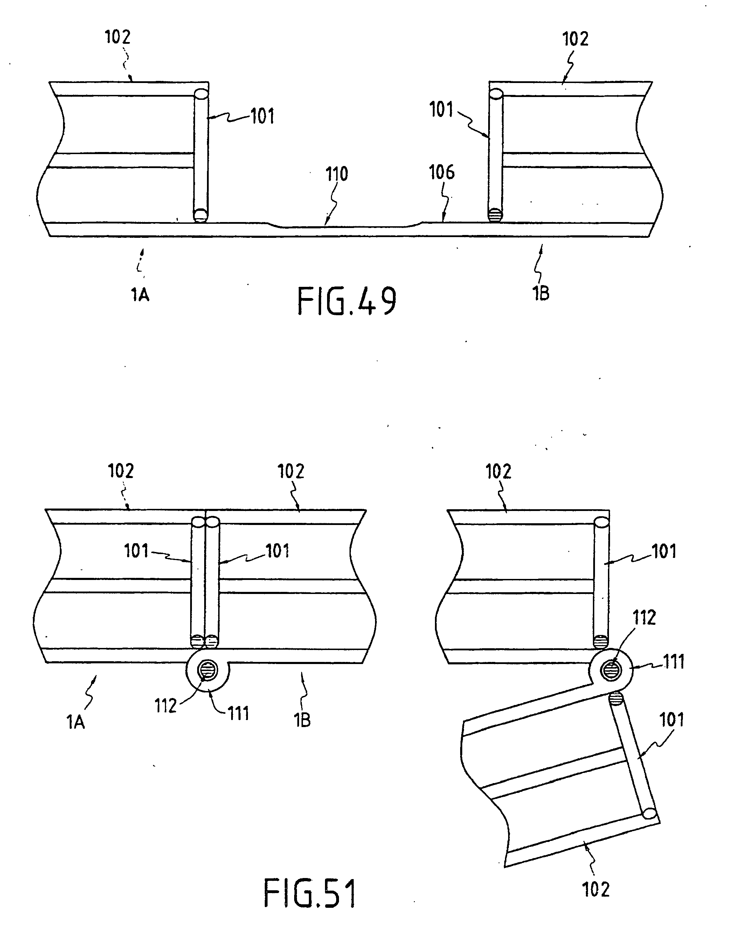

Dans le treizième mode de réalisation représenté en figure 49, les fils de chaîne 106 sont amincis en au moins une zone 110, de sorte à permettre leur cambrage depuis une position extrême de repli des deux tronçons 1A,1B, jusque dans leur position d'alignement longitudinal représenté en figure 49.

Dans le mode de réalisation des figures 50 et 51, les fils de chaîne de la paroi de fond des deux tronçons 1A,1B sont pourvus de boucles 111 formant support pour une fiche transversale 112.

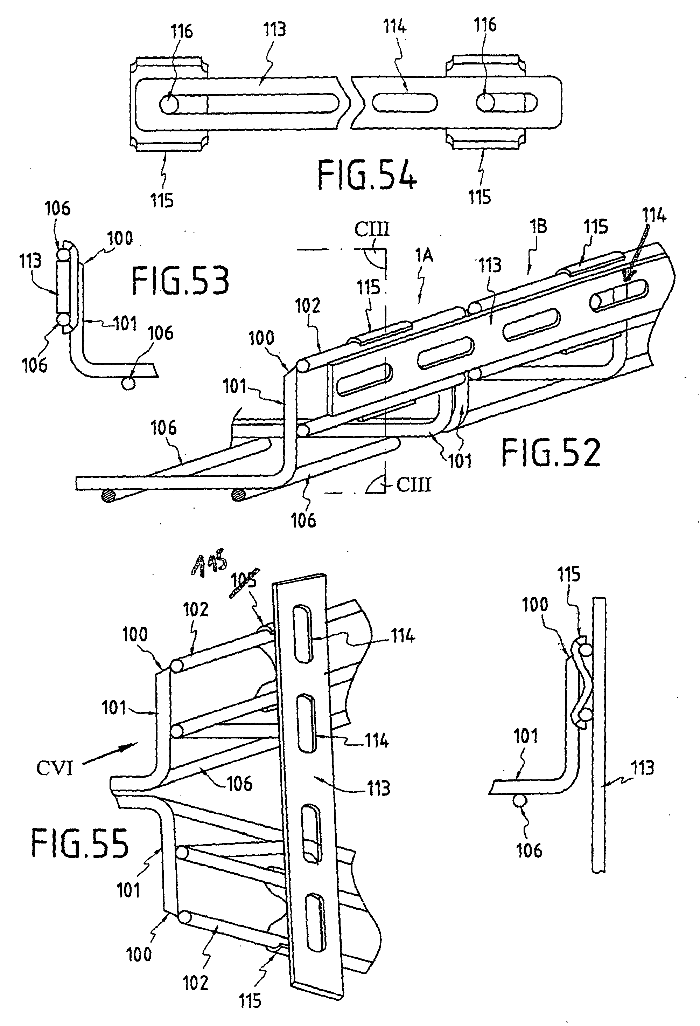

On se reporte maintenant aux figures 52 à 56.

Un barreau 113 pourvu de trous traversant oblongs 114 forme pièce de liaison entre les deux tronçons 1A,1B. A cette fin, chaque tronçon est pourvu, sur une aile, d'une pièce support d'axe 115, de section transversale sensiblement en C, une de ces pièces 115 étant encliquetée ou soudée sur deux fils de chaîne d'une aile de chacun des deux tronçons 1A,1B.

Les axes 116 portés par ces pièces 115 passent au travers des trous traversant oblongs 114 du barreau 113.

Dans une réalisation particulière, l'extrémité libre des axes 116 forme une tête ronde fraisée ou bombée et ces axes forment mandrin pour un ressort spiral (non représenté), ou tout autre moyen élastique équivalent tel que par exemple un clip.

Lorsque le barreau 113 est en position longitudinale telle que représenté en figure 52, le ressort tend à plaquer le barreau 113 entre les fils de chaîne 106 des ailes alignées des tronçons 1A,1B, comme vu en figure 53, verrouillant ainsi les deux tronçons en alignement longitudinal. Le barreau 113 ne saille pas au delà de l'épaisseur des fils de chaîne des ailes.

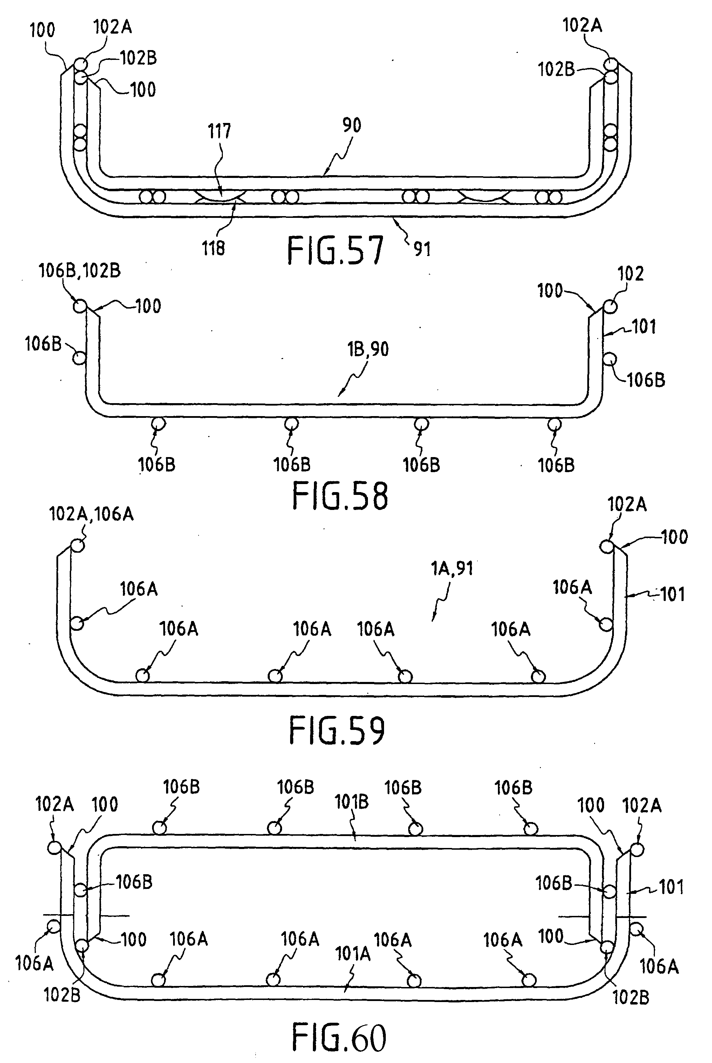

Lorsque le barreau 113 est en position non longitudinale, comme par exemple représenté en figure 55, au cours du pivotement d'un tronçon 1A par rapport à l'autre, le ressort tend à plaquer le barreau 113 contre les fils de chaîne des ailes des tronçons, comme il apparaît en figure 56.

On se reporte maintenant aux figures 57 à 60.

Les figures 57 à 59 illustrent un premier mode d'empilement ou repli en coulissement de deux tronçons de chemins de câbles à fils. Selon ce premier mode, un premier tronçon 1A est pourvu de fils de chaîne 106A et de fils de rive 102A disposés en face interne par rapport aux fils de trame 101, tandis que le deuxième tronçon 1B est pourvus de fils de chaîne 106B et de fils de rive 102B disposés en face externe par rapport aux fils de trame 101.

Le deuxième tronçon 1B présente une largeur externe sensiblement égale à la largeur interne du premier tronçon 1A.

Lorsque le deuxième tronçon 1B est en position de stockage et transport vue en figure 57, ses fils de chaîne 106B sont disposés entre les fils de chaîne 106B du premier tronçon 1A.

Le cas échéant, des saillies 117,118 disposés sur les fils de trame 101 des deux tronçons 1A,1B assurent, de manière analogue à ce qui a été présenté. en figure 36, un maintien à distance déterminée des parois de fond des tronçons 1A,1B.

La figure 60 illustre un deuxième mode d'empilement de deux tronçons 1A,1B. Dans cette réalisation, les ailes d'un premier tronçon 1A sont pourvues de fils de chaîne et de rive 106A,102A disposés en faxe externe par rapport aux fils de trame 101A, les ailes du deuxième tronçon 1B étant pourvues de fils de chaîne et de fils de rive 106B,102B disposés également en face externe par rapport aux fils de trame 101B.

Lorsque les tronçons 1A,1B sont en position de repli l'un sur l'autre, les fils de chaîne 106B des ailes du deuxième tronçon 1B viennent en appui contre l'intérieur des ailes du premier tronçon 1A, c'est à dire contre les fils de trame 101A de ce premier tronçon 1A.

On se reporte maintenant aux figures 61 et 62.

Dans ce mode particulier de réalisation, deux fils de chaîne 106A d'un premier tronçon 1A (en l'espèce ici un fil de chaîne d'une aile et le fil de rive 102A de cette aile) saillent au delà du plan transversal d'extrémité TA de ce premier tronçon 1A pour former une boucle 119 comprenant deux segments sensiblement longitudinaux 120,121 et une partie extrême courbe 122 de liaison de ces deux segments 120,121.

La boucle ainsi constituée est sensiblement rigide et s'étend dans un plan sensiblement disposé dans le prolongement de celui de l'aile 3 à partir de laquelle saille cette boude 119.

La longueur L119 de cette boude est inférieure ou sensiblement égale, au jeu fonctionnel près, à la distance séparant deux fils de trame successifs du deuxième tronçon 1B, ou bien encore à la distance séparant le plan transversal d'extrémité TB de ce deuxième tronçon 1B avec le premier fil de trame de ce tronçon 1B (lorsque le deuxième tronçon ne comporte pas de fil de trame au voisinage immédiat de ce plan TB).

Le deuxième tronçon 1B est pourvu de saillies 123, sur ses fils de chaîne, ces saillies étant configurées de elle sort à permettre l'appui autour d'un fil de trame du premier tronçon (en l'espèce ici le segment de base 124 du fil de trame d'extrémité du premier tronçon 1A).

L'insertion de la boucle 119 entre les fils de chaîne de l'aile du deuxième tronçon 1B assure le verrouillage en alignement longitudinal des deux tronçons 1A,1B.

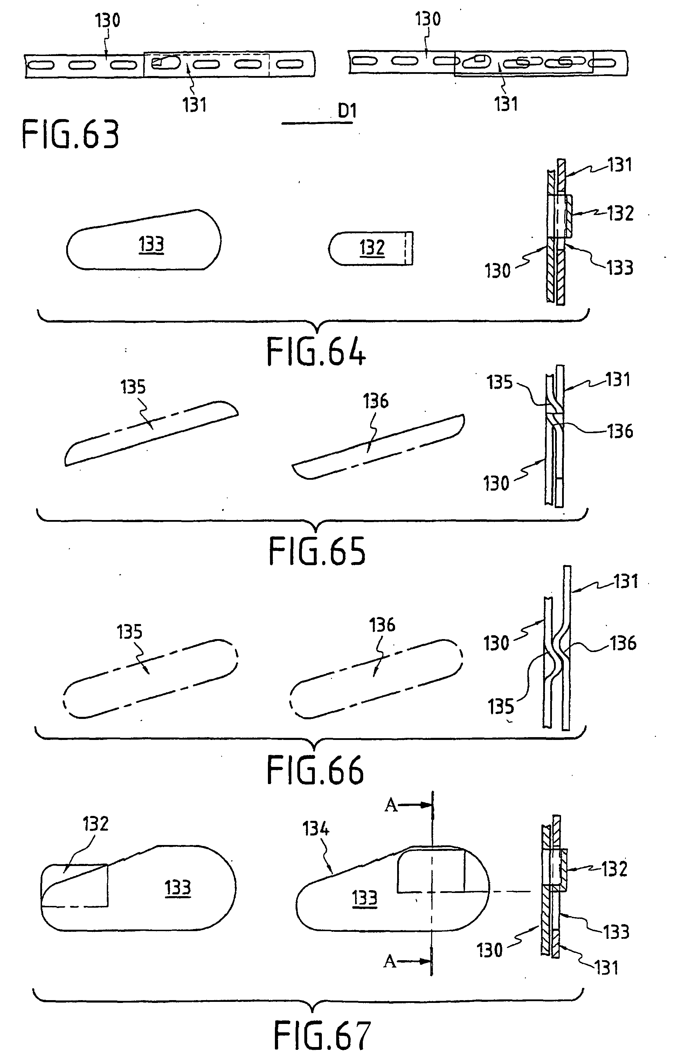

On se reporte maintenant aux figures 63 et suivantes.

Lors du coulissement de deux tronçons de chemins de câbles, tel que décrit auparavant en référence aux figures 37 à 40, 57 à 59, le verrouillage en position souhaitée peut être assuré par les moyens illustrés en figures 63 et suivantes, et aussi ceux référencés 117,118 en figure 57, 124 en figure 61 et 123 en figure 62.

En figure 63 sont représentées deux pièces 130,131 dans deux positions distinctes de coulissement.

Ces deux pièces peuvent être les ailes ou les parois de fond de deux chemins de câbles en feuille.

Ces deux pièces peuvent, en variante, être rapportées, par exemple par encliquetage, soudage ou tout autre moyen équivalent, sur les ailes ou paroi de fond de deux chemins de câbles à fil. Ces deux pièces peuvent ainsi et notamment faire partie de plaques d'habillage d'un chemin de câbles à fil, plaques d'habillage et de renfort dont les avantages ont été présentés auparavant.

Une de ces deux pièces est pourvue d'une saillie 132 venant se loger dans une ouverture 133 de la deuxième pièce.

Dans un premier temps, la saillie 132 lors du coulissement évite les perforations, car elle est décalée par rapport à ces perforations et vient se placer sensiblement sans contrainte dans l'ouverture 133 par élasticité de la tôle, cette position étant schématisée en partie gauche de la figure 67 et 64.

Puis, par suite du coulissement relatif des deux pièces 130,131, et de la pente 134 dont est pourvu le bord de l'ouverture 133, la saillie 132 vient progressivement en appui en en contrainte contre le bord de cette ouverture, interdisant ainsi un coulissement supplémentaire d'une pièce par rapport à l'autre.

Dans la variante de la figure 64 (partie droite de cette figure), le blocage en coulissement est obtenu par les courbures complémentaires de la saillie 132 et du bord de l'ouverture 133.

Dans les variantes représentées en figures 65 et 66, les deux pièces 130,131 sont chacune pourvues de reliefs 135,136 sensiblement identiques et décalés longitudinalement, ces reliefs étant inclinés par rapport à la direction D1, tout comme le bord 134 de l'ouverture 133.

## Revendications

1. Chemin de câbles en forme de gouttière **caractérisé en ce qu'**il comprend au moins deux tronçons (1A,1B,90,91) pourvus de moyens aptes et conçus pour assurer le mouvement relatif des deux tronçons (1A,1B,90,91) depuis une première position compacte, de transport ou stockage, jusqu'à une deuxième position déployée d'utilisation dans laquelle les parties extrêmes des tronçons (1A,1B,90,91) sont sensiblement en alignement longitudinal, des moyens assurant un verrouillage des tronçons (1A,1B,90,91) dans cette deuxième position.

2. Chemin de câbles selon la revendication 1, **caractérisé en ce que** les moyens aptes et conçus pour assurer le mouvement relatif des deux tronçons (1A,1B,90,91) depuis leur première jusqu'à leur deuxième position relative sont des moyens d'articulation ou des moyens de coulissement.

3. Chemin de câbles selon la revendication 2, **caractérisé en ce que** les moyens d'articulation définissent un axe d'articulation sensiblement parallèle à une direction transversale à la paroi de fond (2) des tronçons (1A 1B).

4. Chemin de câbles selon la revendication 2, **caractérisé en ce que** les moyens d'articulation définissent un axe d'articulation sensiblement parallèle à une direction transversale à une aile (3) des tronçons (1A 1B).

5. Chemin de câbles selon l'une quelconque des revendications 3 ou 4, **caractérisé en ce que** l'articulation des deux tronçons (1A 1B) est assurée par des moyens d'articulation comprenant une charnière.

6. Chemin de câbles selon la revendication 5, **caractérisé en ce que** la charnière comprend une platine rapportée ou intégrée sur l'un des deux tronçons (1A,1B), cette platine rapportée portant des charnons complémentaires de ceux portés par l'autre tronçon.

7. Chemin de câbles selon la revendication 5, **caractérisé en ce que** la charnière comprend deux platines rapportées ou intégrées, chaque tronçon supportant une platine, une fiche traversant les charnons des platines.

8. Chemin de câbles selon la revendication 7, **caractérisé en ce que** la fiche est amovible.

9. Chemin de câbles selon la revendication 8, **caractérisé en ce que** les tronçons sont empilables, après enlèvement de la fiche.

10. Chemin de câbles selon l'une quelconque des revendications 5 à 9, **caractérisé en ce que** la charnière est de type compris parmi le groupe constitué des charnières américaines, des charnières à double feuille, des charnières à noeud renvoyé, des charnières à congés, des charnières à briquet, des charnières à ressort, des charnières à piano.

11. Chemin de câbles selon la revendication 3 ou 4, **caractérisé en ce que** chacun des deux tronçons porte, sur au moins un de ses bords transversaux, des saillies (4) formant charnons d'articulation, venues de matière ou rapportée.

12. Chemin de câbles selon la revendication 11, **caractérisé en ce qu'**un premier tronçon porte, sur un de ses bords libres transversaux, au moins deux saillies (4) formant charnons d'articulation, un deuxième tronçon destiné à être articulé au premier tronçon, portant sur un de ses bords libres transversaux, au moins deux trous traversant (5) de passage de ces charnons.

13. Chemin de câbles selon la revendication 12, **caractérisé en ce que** les trous traversant (5) disposés sur la paroi de fond (2) du deuxième tronçon (1B) sont disposés en retrait longitudinal par rapport au plan transversal tangent (TA) au bord extrême libre des ailes (3) de ce deuxième tronçon (1B).

14. Chemin de câbles selon la revendication 12 ou 13, **caractérisé en ce que** les saillies (4) formant charnons disposées sur la paroi de fond (2) du premier tronçon (1A) saillent au delà du plan transversal tangent (TA) au bord extrême libre des ailes (3) de ce premier tronçon (1A).

15. Chemin de câbles selon l'une quelconque des revendications 1 à 4, **caractérisé en ce que** les deux tronçons (1A,1B) comprennent deux ailes (3) saillant sur les bords latéraux d'une paroi de fond (2), l'articulation de ces deux tronçons (1A,1B) entre leur première et deuxième position relative étant assurée par des moyens d'articulation disposés sur chacune des ailes (3) de ces tronçons (1A,1B).

16. Chemin de câbles selon la revendication 15, **caractérisé en ce que** les moyens d'articulation comprennent deux pièces de liaison (7) montées ou façonnés sur les faces internes et en regard des ailes (3) des tronçons (1A,1B).

17. Chemin de câbles selon la revendication 16, **caractérisé en ce que** les pièces de liaison (7) présentent au moins une lumière (8) au travers de laquelle passe un axe (9) porté par une aile (3) d'un premier tronçon, les pièces de liaison (7) comprenant en outre au moins un téton (10) venant s'engager dans une empreinte (16) portée par une aile du deuxième tronçon, l'engagement de ce téton (10) dans cette empreinte (16) lors du pivotement relatif d'un tronçon (1A) par rapport à l'autre (1B), assurant un verrouillage en alignement longitudinal de la partie extrême des deux tronçons (1A, 1B).

18. Chemin de câbles selon l'une quelconque des revendications 16 ou 17, **caractérisé en ce que** les pièces de liaison (7) sont sensiblement planes et en forme de demi-disque ou demi-anneau.

19. Chemin de câbles selon l'une quelconque des revendications 16 à 18, **caractérisé en ce que** les parties extrêmes des tronçons (1A, 1B) venant en regard l'une de l'autre sont pourvues de gorges longitudinales (12) de passage des pièces de liaison (7).

20. Chemin de câbles selon l'une quelconque des revendications 16 à 19, **caractérisé en ce que** les bords supérieurs longitudinaux (6) des ailes (3) des tronçons (1A,1B) sont ourlés vers l'intérieur de ces tronçons (1A,1B).

21. Chemin de câbles selon l'une quelconque des revendications 17 à 20, **caractérisé en ce que** les tétons (10) des pièces de liaison (7) sont issus d'emboutissage, les empreintes (16) dans lesquelles viennent se loger ces tétons (10) étant des trous traversant

22. Chemin de câbles selon la revendication 15, **caractérisé en ce que** les moyens d'articulation comprenant deux pièces de liaison (20) montées sur les faces externes des ailes (3) des tronçons (1A,1B).

23. Chemin de câbles selon la revendication 22, **caractérisé en ce que** les pièces de liaison (20) comprennent une lumière allongée (22) dans laquelle viennent coulisser deux axes (21) saillant vers l'extérieur des ailes (3) de tronçon, cette lumière (22) étant pourvue d'encoches (23) sensiblement distantes de l'écartement des axes (21), mesuré en position d'alignement longitudinal des deux tronçons (1A, 1B).

24. Chemin de câbles selon l'une quelconque des revendications 1 à 4, **caractérisé en ce que** l'articulation des deux tronçons (1A, 1B) est assurée par une ligne d'affaiblissement transversale (60).

25. Chemin de câbles selon la revendication 24 **caractérisé en ce que** cette ligne d'affaiblissement (60) comprend des perforations (61) dans la paroi de fond (2) ou une aile (3) des tronçons (1A,1B) et/ou un amincissement de cette paroi de fond (2) ou de cette aile (3).

26. Chemin de câbles selon l'une quelconque des revendications 1 à 4, **caractérisé en ce que** les ailes (34) d'un premier tronçon sont pourvues de saillies longitudinales (30) supportant un axe transversal (31) commun aux ailes du deuxième tronçon.

27. Chemin de câbles selon la revendication 26, **caractérisé en ce qu'**au moins une saillie longitudinale est pourvue de reliefs tels qu'emboutis (33) venant se loger dans des réservations de verrouillage (32), disposées dans le deuxième tronçon, lorsque les deux tronçons sont en alignement longitudinal.

28. Chemin de câbles selon la revendication 26 ou 27, **caractérisé en ce que** les ailes des premiers et deuxièmes tronçons sont sensiblement perpendiculaires à la paroi de fond des tronçons, les bords libres (6) de ces ailes (34) étant ourlés vers l'intérieur des tronçons.

29. Chemin de câbles selon l'une quelconque des revendications 1 à 4, **caractérisé. en ce que** l'articulation des deux tronçons (1A 1B) est assurée par des moyens d'articulation comprenant une lame élastique (70).

30. Chemin de câbles selon la revendication 29, **caractérisé en ce que** la lame élastique (70) est fixée par collage, soudage ou encliquetage sur la paroi de fond (2) ou une aile (3) des deux tronçons articulés (1A,1B).

31. Chemin de câbles selon l'une quelconque des revendications 1 à 30, **caractérisé en ce qu'**au moins un de ses tronçons est pourvu de saillies (80), sur la face inférieure de sa paroi de fond (2), ces saillies (80) formant butée d'appui, lorsque les tronçons sont empilés, contre la face interne du tronçon placé au dessous, dans l'empilement.

32. Chemin de câbles selon la revendication 1 ou 2, **caractérisé en ce qu'**il comprend au moins un premier tronçon interne (90), monté coulissant par rapport à un deuxième tronçon externe (91), le tronçon interne et le tronçon externe sont sensiblement homothétiques, des moyens de verrouillage assurent le blocage relatif des deux tronçons en fin de course.

33. Chemin de câbles selon la revendication 32, **caractérisé en ce que** le bord longitudinal haut (94,95) des ailes (93,96) de chacun des tronçons externe et interne (90,91) est ourlé vers l'extérieur ou vers l'intérieur des tronçons.

34. Chemin de câbles selon l'une quelconque des revendications 32 ou 33, **caractérisé en ce que** les ailes (93,96) des tronçons interne et externe (90,91) sont pourvues d'un ressaut (92,97) inhibant le mouvement vertical du tronçon interne (90) par rapport au tronçon externe (91).

35. Chemin de câbles selon l'une quelconque des revendications 1 à 34, **caractérisé en ce qu'**au moins un des deux tronçons est à base de treillis de fil nu ou habillé, ou en feuille perforée ou non.

36. Chemin de câbles selon l'une quelconque des revendications 1 à 4, **caractérisé en ce que** les parties extrêmes des deux tronçons sont en treillis de fil, les moyens d'articulation comprenant une boucle d'articulation (103) ou une bande (104) reliant les fils de trame extrêmes des tronçons (1A,1B) sur leur segment de base (105) de paroi de fond de ces tronçons (1A,1B).

37. Chemin de câbles selon l'une quelconque des revendications 1 à 4, **caractérisé en ce que** les parties extrêmes des deux tronçons sont en treillis de fils, les moyens d'articulation comprenant au moins deux parties extrêmes saillantes (109) courbées en S des fils de chaîne d'au moins un des tronçons (1A,1B).

38. Chemin de câbles selon l'une quelconque des revendications 1 à 4, **caractérisé en ce que** les parties extrêmes des deux tronçons sont en treillis de fils, les moyens d'articulation comprenant un amincissement des fils de chaîne (106) en au moins une zone (110) de la paroi de fond ou d'une aile de ces tronçons.

39. Chemin de câbles selon l'une quelconque des revendications 36 à 38, **caractérisé en ce que** les moyens de verrouillage en position d'alignement longitudinal des parties extrêmes des tronçons comprennent un barreau (113) maintenu plaqué entre les fils de chaînes (106) des ailes contiguës des deux tronçons, ce barreau (113) étant monté articulé sur les deux tronçons.

40. Chemin de câbles selon l'une quelconque des revendications 36 à 39, **caractérisé en ce**, sur au moins une aile des tronçons, une bande élastique (108) vient enserrer les fils de trame extrêmes des tronçons (1A,1B) placés en vis à vis, lorsque les parties extrêmes des tronçons (1A,1B) sont dans leur position d'alignement longitudinal.

## Claims

1. A cableway, comprising at least two segments (1A,1B,90,91) provided with means suitable and designed for enabling relative movement of the two segments (1A,1B,90,91) between a compact, first position for transport or storage and a deployed, second position for use, in which the end portions of the segments (1A,1B,90,91) are substantially in longitudinal alignment, means being provided to lock the segments (1A,1B,90,91) in said second position.

2. A cableway according to claim 1, wherein the means suitable and designed for enabling relative movement of the two segments (1A,1B,90,91) between their first and second relative positions are articulated joint means or sliding means.

3. A cableway according to claim 2, wherein the joint means define an axis of articulation substantially parallel to a direction transverse to the bottom walls (2) of the segments (1A,1B).

4. A cableway according to claim 2, wherein the joint means define an axis of articulation substantially parallel to a direction that is transverse to one of the flanges (3) of each of the segments (1A,1B).

5. A cableway according to claim 3 or 4, wherein the two segments (1A,1B) are joined by articulated joint means comprising a hinge.

6. A cableway according to claim 5, wherein the hinge comprises respective leaves fitted to or integral with each of the two segments (1A,1B), the fitted leaf carrying knuckles complementary to knuckles carried by the other segment.

7. A cableway acorn to claim 5, wherein the hinge comprises two fitted or integral leaves, each segment supporting one of the leaves, a pin passing through the knuckles of the leaves.

8. A cableway according to claim 7, wherein the pin is removable.

9. A cableway according to claim 8, wherein the segments are stackable after removing the pin.

10. A cableway according to any of claim 5 to 9, wherein the hinge is of the type selected from the group constituted by: hinges having blank leaves for drilling and countersinking from either face, hinges having leaves in the form of sheets folded in half, hinges having leaves that are offset when parallel, hinges with leaves tapering away from their hinge pins, hinges having pairs of parallel pins interconnected by links, spring hinges, piano hinges.

11. A cableway according to claim 3 or 4, wherein each of the two segment carries, on at least one of its transverse edges, knuckle-forming projections (4) formed integrally therewith or fitted thereto.

12. A cableway according to claim 11, wherein a first segment carries, on one of its transverse free edges, at least two knuckle-forming projections (4), a second segment for being joined to the first segment carrying on one of its transverse free edges at least two through holes (5) for passing said projections.

13. A cableway according to claim 12, wherein the through holes (5) in the bottom wall (2) of the second segment (1B) are set back longitudinally from the transverse plane (TA) tangential to the free end edges of the flanges (3) of said second segment (1B).

14. A cableway according to claim 12 or 13, wherein the knuckle-forming projections (4) disposed on the bottom wall (2) of the first segment (1A) project beyond the transverse plane tangential (TA) to the free end edges (3) of the flanges of said first segment (1A).

15. A cableway according to any of claim 1 to 4, wherein each of the two segments (1A,1B) comprises two flanges (3) projecting from the side edges of a bottom wall (2), the articulated joints between the two segments (1A,1B) enabling them to move between their first and second relative positions being provided by joint means placed on each of the flanges (3) of said segments (1A,1B).

16. A cableway according to claim 15, wherein the joint means comprise link pieces (7) mounted or shaped on the facing inner faces of the flanges (3) of the segments (1A,1B).

17. A cableway according to claim 16, wherein each link piece (7) presents at least one slot (8) through which there passes a pin (9) carried by a flange (3) of a first segment, each link piece (7) further comprising at least one stud (10) that engages in a recess (16) carried by a flange of the second segment, the engagement of the stud (10) in the recess (16) during pivoting of one segment (1A) relative to the other (1B) serving to lock the end portions of the two segments (1A,1B) in longitudinal alignment.

18. A cableway according to claim 16 or 17, wherein the link pieces (7) are substantially plane and in the form of half-disks or half-rings.

19. A cableway according to any of claim 16 to 18, wherein the end portions of the segments (1A,1B) that face each other are provided with longitudinal slots (12) for passing link pieces (7).

20. A cableway according to any of claim 16 to 19, wherein the top longitudinal edges (6) of the flanges (3) of the segments (1A,1B) are folded over towards the insides of the segments (1A,1B).

21. A cableway according to any of claim 17 to 20, wherein the studs (10) of the link pieces (7) are the result of stamping, the recesses (16) in which said studs (10) are received being through holes.

22. A cableway according to claim 15, wherein the joint means comprise two link pieces (20) mounted on the outer faces of the flanges (3) of the segments (1A,1B).

23. A cableway according to claim 22, wherein each link piece (20) includes an elongate slot (22) in which two pins (21) projecting outwards from the segment flanges (3) are slidably received, said slot (22) being provided with notches (23) that are spaced apart by substantially the distance between the pins (21) as measured when the two segments (1A,1B) are in the longitudinally-aligned position.

24. A cableway according to any of claim 1 to 4, wherein the two segments (1A,1B) are joined by means of a transverse line of weakness (60).

25. A cableway according to claim 24, wherein the line of weakness (60) comprises perforations (61) through the bottom walls (2) or one of the flanges (3) of the segments (1A,1B), and/or reduced thickness in said bottom walls (2) or said flanges (3).

26. A cableway according to any of claim 1 to 4, wherein the flanges (34) of a first segment are provided with longitudinal projections (30) supporting a transverse pin (31) common to the flanges of the second segment.

27. A cableway according to claim 26, wherein at least one of the longitudinal projections is provided with portions in relief (33) such as stampings that are received in locking setbacks (32) disposed in the second segment, when the two segment are in longitudinal alignment.

28. A cableway according to claim 26 or 27, wherein the flanges of the first and second segments are substantially parallel to the bottom walls of the segments, the free edges (6) of the flanges (34) being folded over towards the insides of the segments.

29. A cableway according to any of claim 1 to 4, wherein the two segments (1A,1B) are joined by joint means comprising a spring blade (70).

30. A cableway according to claim 29, wherein the spring blade (70) is fixed by adhesive, welding, or snap-fastening to the bottom wall (2) or to one of the flanges (3) of the two hinged segments (1A,1B).

31. A cableway according to any of claim 1 to 30, wherein at least one of its segments is provided with projections (80) on the bottom face of its bottom wall (2), said projections (80) forming support abutments when the segments are stacked, engaging the inside face of the segment placed beneath it in the stack.

32. A cableway according to claim 1 or 2, comprising at least one inner, first segment (90) mounted to slide relative to an outer, second segment (91), the inner segment and the outer segment being substantially geometrically similar, locking means serving to lock the two segments relative to each other at the end of their stroke.

33. A cableway according to claim 32, wherein the top longitudinal edges (94,95) of the flanges (93,96) of each of the outer and inner segments (90,91) are folded over towards the outside or towards the inside of the segments.

34. A cableway according to claim 32 or 33, wherein the flanges (93,96) of the inner and outer segments (90,91) are provided with respective steps (92,97) preventing the inner segment (90) moving vertically relative to the outer segment (91).

35. A cableway according to any of claim 1 to 34, wherein at least one of the two segments is based on a bare or lined wire basket structure, or on an optionally perforated sheet.

36. A cableway according to any of claim 1 to 4, wherein the end portions of the two segments are made as wire baskets, the joint means comprising a joint loop (103) or strip (104) connecting together the end weft wires of the segments (1A,1B) via their base portions (105) constituting the bottom walls of said segments (1A,1B).

37. A cableway according to any of claim 1 to 4, wherein the end portions of the two segments are made as wire baskets, the joint means comprising at least two projecting end portions of the warp wires of at least one of the segments (1A,1B), said end portions (109) being curved into S-shapes.

38. A cableway according to any of claim 1 to 4, wherein the end portions of the two segments are made as wire baskets, the joint means comprising a portion of reduced thickness of the warp wires (106) in at least one zone (110) of the bottom walls or one of the flanges of said segments.

39. A cableway according to any of claim 36 to 38, wherein the means for locking the end portions of the segments in the longitudinally-aligned position comprise a bar (113) held pressed between the warp wires (106) of contiguous flanges of the two segments, said bar (113) being mounted in articulated manner to both of the segments.

40. A cableway according to any of claim 36 to 39, wherein a resilient strip (108) on at least one of the flanges of the segments clamps together the end weft wires of the segments (1A,1B) placed facing each other, when the end portions of the segments (1A,1B) are in their longitudinally-aligned position.

## Patentansprüche

1. Rinnenförmiger Kabelkanal **dadurch gekennzeichnet, dass** er wenigstens zwei Abschnitte (1A,1B,90,91) aufweist, die mit Mitteln versehen sind, welche geeignet und konzipiert sind, um die Relativbewegung der beiden Abschnitte (1A,1B,90,91) von einer ersten kompakten Transport- oder Lagerungsposition bis zu einer zweiten entfalteten Verwendungsposition, in welcher die äußersten Teile der Abschnitte (1A,1B,90,91) im Wesentlichen längs ausgerichtet sind, zu gewährleisten, wobei Mittel eine Verriegelung der Abschnitte (1A,1B,90,91) in dieser zweiten Position sicherstellen.

2. Kabelkanal nach Anspruch 1, **dadurch gekennzeichnet, dass** die Mittel, welche geeignet und konzipiert sind, um die Relativbewegung der beiden Abschnitte (1A,1B,90,91) von ihrer ersten bis zu ihrer zweiten Relativposition sicherzustellen, Gelenkmittel oder Schiebemittel sind.

3. Kabelkanal nach Anspruch 2, **dadurch gekennzeichnet, dass** die Gelenkmittel eine Gelenkachse definieren, die zu einer zur Bodenwand (2) der Abschnitte (1A,1B) querlaufenden Richtung im Wesentlichen parallel ist.

4. Kabelkanal nach Anspruch 2, **dadurch gekennzeichnet, dass** die Gelenkmittel eine Gelenkachse definieren, die zu einer zu einem Flügel (3) der Abschnitte (1A,1B) querlaufenden Richtung im Wesentlichen parallel ist.

5. Kabelkanal nach irgendeinem der Ansprüche 3 oder 4, **dadurch gekennzeichnet, dass** die Schwenkbarkeit der beiden Abschnitte (1A,1B) durch Gelenkmittel, die ein Scharnier aufweisen, gewährleistet ist.

6. Kabelkanal nach Anspruch 5, **dadurch gekennzeichnet, dass** das Scharnier eine Platte aufweist, die an bzw. in den einen der beiden Abschnitte (1A,1B) angesetzt oder integriert ist, wobei diese angesetzte Platte Scharnierteile trägt, welche zu denjenigen, die von dem anderen Abschnitt getragen werden, komplementär sind.

7. Kabelkanal nach Anspruch 5, **dadurch gekennzeichnet, dass** das Scharnier zwei angesetzte oder integrierte Platten enthält, wobei jeder Abschnitt eine Platte trägt, wobei ein Stift die Scharnierteile der Platten durchdringt.

8. Kabelkanal nach Anspruch 7, **dadurch gekennzeichnet, dass** der Stift lösbar ist.

9. Kabelkanal nach Anspruch 8, **dadurch gekennzeichnet, dass** die Abschnitte nach Entfernen des Stiftes stapelbar sind.

10. Kabelkanal nach irgendeinem der Ansprüche 5 bis 9, **dadurch gekennzeichnet, dass** das Scharnier vom Typ ist, welcher enthalten ist in der Gruppe bestehend aus amerikanischen Scharnieren, Doppelblatt-Scharnieren, Scharnieren mit Rücksprungknoten, Hohlkehlenscharnieren, Feuerzeug-Scharnieren, Federscharnieren, Klavierscharnieren.

11. Kabelkanal nach Anspruch 3 oder 4, **dadurch gekennzeichnet, dass** jeder der beiden Abschnitte an wenigstens einem seiner Querränder Gelenkscharnierteile bildende Vorsprünge (4) trägt, welche in einem Stück aus dem Material gebildet oder angesetzt sind.

12. Kabelkanal nach Anspruch 11, **dadurch gekennzeichnet, dass** ein erster Abschnitt an einem seiner freien Querränder wenigstens zwei Gelenkscharnierteile bildende Vorsprünge (4) trägt, wobei ein zweiter Abschnitt, welcher an dem ersten Abschnitt gelenkig angebracht werden soll, an einem seiner freien Querränder wenigstens zwei Durchbohrungen (5) für den Durchgang dieser Scharnierteile trägt.

13. Kabelkanal nach Anspruch 12, **dadurch gekennzeichnet, dass** die an der Bodenwand (2) des zweiten Abschnittes (1B) angeordneten Durchbohrungen (5) gegenüber der Tangentialquerebene (TA) an den äußersten freien Rand der Flügel (3) dieses zweiten Abschnittes (1B) längs zurückspringend angeordnet sind.

14. Kabelkanal nach Anspruch 12 oder 13, **dadurch gekennzeichnet, dass** die Scharnierteile bildenden Vorsprünge (4), welche an der Bodenwand (2) des ersten Abschnittes (1A) angeordnet sind, über die Tangentialquerebene (TA) an den äußersten freien Rand der Flügel (3) dieses ersten Abschnittes (1A) hinaus vorspringen.

15. Kabelkanal nach irgendeinem der Ansprüche 1 bis 4, **dadurch gekennzeichnet, dass** die beiden Abschnitte (1A,1B) zwei Flügel (3) aufweisen, welche an den Seitenrändern einer Bodenwand (2) vorspringen, wobei die Schwenkbarkeit dieser beiden Abschnitte (1A,1B) zwischen ihrer ersten und zweiten Relativposition durch Gelenkmittel sichergestellt ist, die an jedem der Flügel (3) dieser Abschnitte (1A,1B) angeordnet sind.

16. Kabelkanal nach Anspruch 15, **dadurch gekennzeichnet, dass** die Gelenkmittel zwei Verbindungsteile (7) aufweisen, welche an den Innenseiten und gegenüber den Flügeln (3) der Abschnitte (1A,1B) angebracht oder angeformt sind.

17. Kabelkanal nach Anspruch 16, **dadurch gekennzeichnet, dass** die Verbindungsteile (7) wenigstens ein Langloch (8) aufweisen, das von einer Achse (9) durchquert wird, welche von einem Flügel (3) eines ersten Abschnitts getragen wird, wobei die Verbindungsteile (7) weiterhin wenigstens einen Ansatz (10) enthalten, der in eine Vertiefung (16) eingreifen wird, welche von einem Flügel des zweiten Abschnitts getragen wird, wobei der Eingriff dieses Ansatzes (10) in diese Vertiefung (16) während des Relativschwenkens eines Abschnitts (1A) gegenüber dem anderen (1B) ein Verriegeln in Längsausrichtung des äußersten Teils der beiden Abschnitte (1A,1B) gewährleistet.

18. Kabelkanal nach irgendeinem der Ansprüche 16 oder 17, **dadurch gekennzeichnet, dass** die Verbindungsteile (7) im Wesentlichen eben sind und die Form einer Halbscheibe oder eines Halbringes aufweisen.

19. Kabelkanal nach irgendeinem der Ansprüche 16 bis 18, **dadurch gekennzeichnet, dass** die einander gegenüber gelangenden äußersten Teile der Abschnitte (1A,1B) mit Längskehlen (12) zum Durchführen der Verbindungsteile (7) versehen sind.

20. Kabelkanal nach irgendeinem der Ansprüche 16 bis 19, **dadurch gekennzeichnet, dass** die oberen Längsränder (6) der Flügel (3) der Abschnitte (1A,1B) zur Innenseite dieser Abschnitte (1A,1B) hin gesäumt sind.

21. Kabelkanal nach irgendeinem der Ansprüche 17 bis 20, **dadurch gekennzeichnet, dass** die Ansätze (10) der Verbindungsteile (7) durch Tiefziehen entstanden sind, wobei die Vertiefungen (16), in denen diese Ansätze (10) aufgenommen werden, Durchbohrungen sind.

22. Kabelkanal nach Anspruch 15, **dadurch gekennzeichnet, dass** die Gelenkmittel zwei Verbindungsteile (20) aufweisen, die an den Außenseiten der Flügel (3) der Abschnitte (1A,1B) angebracht sind.

23. Kabelkanal nach Anspruch 22, **dadurch gekennzeichnet, dass** die Verbindungsteile (20) ein langgestrecktes Schlitzloch (22) aufweisen, in dem sich zwei zur Außenseite der Abschnittflügel (3) vorspringende Achsen (21) verschieben lassen, wobei dieses Schlitzloch (22) mit Nuten (23) versehen ist, die im Wesentlichen um den in Längsausrichtungsposition der beiden Abschnitte (1A,1B) gemessenen Abstand der Achsen (21) voneinander entfernt sind.

24. Kabelkanal nach irgendeinem der Ansprüche 1 bis 4, **dadurch gekennzeichnet, dass** die Schwenkbarkeit der beiden Abschnitte (1A,1B) durch eine Querschwächungslinie (60) gewährleistet ist.

25. Kabelkanal nach Anspruch 24, **dadurch gekennzeichnet, dass** diese Schwächungslinie (60) Löcher (61) in der Bodenwand (2) oder einem Flügel (3) der Abschnitte (1A,1B) und/oder eine Verdünnung dieser Bodenwand (2) oder dieses Flügels (3) aufweist.

26. Kabelkanal nach irgendeinem der Ansprüche 1 bis 4, **dadurch gekennzeichnet, dass** die Flügel (34) eines ersten Abschnittes mit Längsvorsprüngen (30) versehen sind, die eine Querachse (31) tragen, welche den Flügeln des zweiten Abschnittes gemeinsam ist.

27. Kabelkanal nach Anspruch 26, **dadurch gekennzeichnet, dass** wenigstens ein Längsvorsprung mit Reliefs wie beispielsweise Vorsprüngen (33) versehen ist, die in im zweiten Abschnitt angeordneten Verriegelungsaussparungen (32) aufgenommen werden, wenn sich die beiden Abschnitte in Längsausrichtung befinden.

28. Kabelkanal nach Anspruch 26 oder 27, **dadurch gekennzeichnet, dass** die Flügel der ersten und zweiten Abschnitte im Wesentlichen senkrecht zur Bodenwand der Abschnitte verlaufen, wobei die freien Ränder (6) dieser Flügel (34) zur Innenseite der Abschnitte hin gesäumt sind.

29. Kabelkanal nach irgendeinem der Ansprüche 1 bis 4, **dadurch gekennzeichnet, dass** die Schwenkbarkeit der beiden Abschnitte (1A,1B) durch Gelenkmittel, die einen elastischen Streifen (70) aufweisen, gewährleistet ist.

30. Kabelkanal nach Anspruch 29, **dadurch gekennzeichnet, dass** der elastische Streifen (70) durch Kleben, Schweißen oder Einrasten an der Bodenwand (2) oder einem Flügel (3) der beiden gelenkigen Abschnitte (1A,1B) befestigt ist.

31. Kabelkanal nach irgendeinem der Ansprüche 1 bis 30, **dadurch gekennzeichnet, dass** wenigstens einer seiner Abschnitte an der Unterseite seiner Bodenwand (2) mit Vorsprüngen (80) versehen ist, wobei diese Vorsprünge (80) - wenn die Abschnitte gestapelt sind - einen Stützanschlag zur Innenseite des in dem Stapel darunter platzierten Abschnittes bilden.

32. Kabelkanal nach Anspruch 1 oder 2, **dadurch gekennzeichnet, dass** er wenigstens einen ersten Innenabschnitt (90) aufweist, welcher verschiebbar gegenüber einem zweiten Außenabschnitt (91) angebracht ist, der Innenabschnitt und der Außenabschnitt im Wesentlichen homothetisch sind, Verriegelungsmittel die Relativblockierung der beiden Abschnitte am Ende des Weges sicherstellen.

33. Kabelkanal nach Anspruch 32, **dadurch gekennzeichnet, dass** der obere Längsrand (94,95) der Flügel (93,96) eines jeden Außen- und Innenabschnitts (90,91) zur Außenseite oder zur Innenseite der Abschnitte hin gesäumt ist.

34. Kabelkanal nach irgendeinem der Ansprüche 32 oder 33, **dadurch gekennzeichnet, dass** die Flügel (93,96) des Innen- und des Außenabschnitts (90,91) mit einer Vorkragung (92,97) versehen sind, welche die Vertikalbewegung des Innenabschnitts (90) gegenüber dem Außenabschnitt (91) hemmt.

35. Kabelkanal nach irgendeinem der Ansprüche 1 bis 34, **dadurch gekennzeichnet, dass** wenigstens einer der beiden Abschnitte auf der Basis von nacktem oder umhülltem Drahtgeflecht ist oder aus perforierter oder nicht perforierter Folie besteht.

36. Kabelkanal nach irgendeinem der Ansprüche 1 bis 4, **dadurch gekennzeichnet, dass** die äußersten Teile der beiden Abschnitte aus Drahtgeflecht sind, wobei die Gelenkmittel eine Gelenkspange (103) oder ein Band (104) aufweisen, welche(s) die äußersten Schussdrähte der Abschnitte (1A,1B) an ihrem Bodenwand-Basissegment (105) dieser Abschnitte (1A,1B) verbindet.

37. Kabelkanal nach irgendeinem der Ansprüche 1 bis 4, **dadurch gekennzeichnet, dass** die äußersten Teile der beiden Abschnitte aus Drahtgeflecht bestehen, wobei die Gelenkmittel wenigstens zwei S-förmig gekrümmte, vorspringende äußerste Teile (109) der Kettdrähte von wenigstens einem der Abschnitte (1A,1B) enthalten.

38. Kabelkanal nach irgendeinem der Ansprüche 1 bis 4, **dadurch gekennzeichnet, dass** die äußersten Teile der beiden Abschnitte aus Drahtgeflecht bestehen, wobei die Gelenkmittel eine Verdünnung der Kettdrähte (106) in wenigstens einem Bereich (110) der Bodenwand oder eines Flügels dieser Abschnitte aufweisen.

39. Kabelkanal nach irgendeinem der Ansprüche 36 bis 38, **dadurch gekennzeichnet, dass** die Mittel zum Verriegeln in der Längsausrichtungsposition der äußersten Teile der Abschnitte einen Stab (113) aufweisen, der zwischen den Kettdrähten (106) der benachbarten Flügel der beiden Abschnitte in Anlage gehalten wird, wobei dieser Stab (113) an den beiden Abschnitten gelenkig angebracht ist.

40. Kabelkanal nach irgendeinem der Ansprüche 36 bis 39, **dadurch gekennzeichnet, dass** an wenigstens einem Flügel der Abschnitte ein elastisches Band (108) die äußersten Schussdrähte der einander gegenüberliegenden Abschnitte (1A,1B) umschlingt, wenn sich die äußersten Teile der Abschnitte (1A,1B) in ihrer Längsausrichtungsposition befinden.
